(19) **Europäisches Patentamt**
**European Patent Office**
**Office européen des brevets**

(11) **EP 3 828 068 A1**

(12) **EUROPEAN PATENT APPLICATION**
published in accordance with Art. 153(4) EPC

(43) Date of publication:
**02.06.2021 Bulletin 2021/22**

(21) Application number: **19842100.0**

(22) Date of filing: **25.07.2019**

(51) Int Cl.:
**B62K 5/10** *(2013.01)*     **B60G 17/015** *(2006.01)*
**B60G 21/05** *(2006.01)*    **B62J 99/00** *(2020.01)*
**B62K 5/027** *(2013.01)*

(86) International application number:
**PCT/JP2019/029256**

(87) International publication number:
**WO 2020/022447 (30.01.2020 Gazette 2020/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **26.07.2018 JP 2018140491**

(71) Applicant: **Equos Research Co., Ltd.**
**Tokyo 101-0021 (JP)**

(72) Inventors:
• **ARAKI, Keizo**
**Tokyo 101-0021 (JP)**
• **MIZUNO, Akira**
**Tokyo 101-0021 (JP)**
• **KUBO, Shota**
**Tokyo 101-0021 (JP)**

(74) Representative: **TBK**
**Bavariaring 4-6**
**80336 München (DE)**

(54) **VEHICLE**

(57)     A vehicle includes: a vehicle body; one or more turn wheels turnable to right and left; a turn wheel support unit; and a controller. The turn wheel support unit includes: a supporting member that rotatably supports the one or more turn wheels; and a turning actuator configured to apply a turning torque to the supporting member. The controller is configured to determine a target lean angle, determine a first type control value by using a difference between the target lean angle and a lean angle, and determine the target turning torque by using one or more control values including the first type control value. Where the first type control value indicates a torque that causes the supporting member to turn in a direction opposite to a target direction that is a rotational direction to rotate the vehicle body in its width direction so that the lean angle approaches the target lean angle.

Fig. 14

EP 3 828 068 A1

**Description**

Technical Field

This specification relates to a vehicle which turns by leaning its vehicle body.

Background Art

Vehicles of which vehicle bodies lean during turning are known. A variety of techniques have been proposed for smoothly leaning a vehicle body to the inside of turn. For example, a technique has been proposed that, when a driver begins to operate a handlebar, changes a steering angle of a steered wheel toward an opposite direction to a rotational direction of handlebar. This technique causes a turn in a direction opposite to a direction intended by the driver, and a centrifugal force generated by the turn causes the vehicle body to lean to the inside of the turn intended by the driver. Accordingly, it is possible to smoothly lean the vehicle body to the inside of the turn.

Prior Art Document

Patent Document

Patent Document 1 Japanese Laid-Open Patent Publication No. 2013-23166

Summary of the Invention

Problems to be Solved by the Invention

In the above document, a target value of steering angle is determined by using a steering wheel angle that is a rotational angle of handlebar. A lean angle of the vehicle body, and the steering angle can change independently. There has been insufficient effort to improve driving stability of vehicle in which the lean angle of vehicle body, and the direction of wheel change in this manner.

This specification discloses the technique of improving driving stability of vehicles.

Means for Solving the Problems

The technique disclosed herein can be implemented as any of application examples listed below.

[Application Example 1]

A vehicle including:

a vehicle body;
N (N is an integer equal to or larger than 2) wheels including one or more turn wheels turnable to right and left relative to a forward movement direction of the vehicle, the N wheels including at least one front wheel and at least one rear wheel;
a lean angle sensor configured to measure a lean angle in a width direction of the vehicle body;
an operation input unit configured to be handled to input an operation amount indicative of a turning direction and a degree of turn;
a turn wheel support unit that supports the one or more turn wheels, and
a controller,
wherein the turn wheel support unit comprises:

a supporting member that rotatably supports the one or more turn wheels;
a turning device that supports the supporting member turnably to right and left relative to the vehicle body; and
a turning actuator configured to apply to the supporting member a turning torque for turning the supporting member, and

wherein a lean angle targeted by the vehicle body is referred to as a target lean angle;
a difference between the target lean angle and the lean angle of the vehicle body is referred to as a lean angle difference; and

a target torque of the turning actuator is referred to as a target turning torque,
wherein the controller is configured to:

determine the target lean angle by using one or more parameters including the operation amount;
determine a first type control value indicative of a first torque by using the lean angle difference , the first torque causing the supporting member to turn in a direction opposite to a target direction that is a rotational direction to rotate the vehicle body in its width direction so that the lean angle approaches the target lean angle, the target direction being either a right direction or a left direction;
determine the target turning torque by using one or more control values including the first type control value; and
control the turning actuator according to the target turning torque.

According to this configuration, the first type control value used to determine the target turning torque is determined to be a value indicative of the first torque causing the supporting member to rotate in a direction opposite to the target direction, and therefore the turning of the supporting member by the turning torque allows the lean angle of the vehicle body to readily approach the target lean angle. In addition, the first type control value is determined by using the lean angle difference, which is a difference between the target lean angle and the lean angle of the vehicle body, and therefore is determined to be a value appropriate for the lean angle difference. Therefore, the driving stability of the vehicle can be improved.

[Application Example 2]

The vehicle according to Application Example 1,
wherein a ratio of a magnitude of the first torque indicated by the first type control value to a magnitude of the lean angle difference is referred to as an angle difference-torque ratio, and
wherein the controller is configured to determine the first type control value so that the angle difference-torque ratio changes according to a vehicle velocity.
According to this configuration, the angle difference-torque ratio changes according to a vehicle velocity, and thus the first type control value appropriate for the vehicle velocity is determined. Therefore, the driving stability of the vehicle can be improved.

[Application Example 3]

The vehicle according to Application Example 2,
wherein the controller is configured to determine the first type control value so that the angle difference-torque ratio when a magnitude of the vehicle velocity is smaller than a first threshold value is larger than the angle difference-torque ratio when the magnitude of the vehicle velocity is larger than the first threshold value.
According to this configuration, the first type control value is determined so that when the magnitude of the vehicle velocity is smaller than the first threshold value, the angle difference-torque ratio is larger as compared to when the magnitude of the vehicle velocity is larger than the first threshold value, and therefore it is possible to suppress delayed change in the lean angle of the vehicle body when the magnitude of the vehicle velocity is smaller.

[Application Example 4]

The vehicle according to any one of Application Examples 1 to 3,
wherein the controller is configured to:

determine a second type control value indicative of a second torque by using an angular velocity of the lean angle of the vehicle body, the second torque causing the supporting member to turn in a direction of change in the lean angle out of the right direction and the left direction; and
determine the target turning torque by using two or more control values including the first type control value and the second type control value.

According to this configuration, the second type control value indicative of the second torque causing the supporting member to turn in the direction of change in the lean angle is determined by using the angular velocity of the lean angle, and the target turning torque is determined by using two or more control values including the first type control value and the second type control value, which can result in improved driving stability of the vehicle.

[Application Example 5]

The vehicle according to Application Example 4,
wherein a ratio of a magnitude of the second torque indicated by the second type control value to a magnitude of the angular velocity of the lean angle is referred to as an angular velocity-torque ratio, and
wherein the controller is configured to determine the second type control value so that the angular velocity-torque ratio changes according to the vehicle velocity.
According to this configuration, the angular velocity-torque ratio changes according to the vehicle velocity, and thus the second type control value appropriate for the vehicle velocity is determined. Therefore, the driving stability of the vehicle can be improved.

[Application Example 6]

The vehicle according to Application Example 5,
wherein the controller is configured to determine the second type control value so that the angular velocity-torque ratio when a magnitude of the vehicle velocity is smaller than a second threshold value is larger than the angular velocity-torque ratio when a magnitude of the vehicle velocity is larger than the second threshold value.
According to this configuration, the second type control value is determined so that when the magnitude of the vehicle velocity is smaller than the second threshold value, the angular velocity-torque ratio is larger as compared to when the magnitude of the vehicle velocity is larger than the second threshold value, and therefore unintended change in the lean angle can be suppressed.

[Application Example 7]

The vehicle according to any one of Application Examples 1 to 6,
wherein the controller is configured to:

determine a third type control value indicative of a third torque by using an angular acceleration of the lean angle of the vehicle body, the third torque causing the supporting member to turn in a direction of change in angular velocity of the lean angle out of the right direction and the left direction; and
determine the target turning torque by using two or more control values including the first type control value and the third type control value.

According to this configuration, the third type control value indicative of the third torque causing the supporting member to turn in the direction of change in the angular velocity of the lean angle is determined by using the angular acceleration of the lean angle, and the target turning torque is determined by using two or more control values including the first type control value and the third type control value, which can result in improved driving stability of the vehicle.

[Application Example 8]

The vehicle according to Application Example 7,
wherein a ratio of a magnitude of the third torque indicated by the third type control value to a magnitude of the angular acceleration of the lean angle is referred to as an angular acceleration-torque ratio, and
wherein the controller is configured to determine the third type control value so that the angular acceleration-torque ratio changes according to a vehicle velocity.
According to this configuration, the angular acceleration-torque ratio changes according to the vehicle velocity, and thus the third type control value appropriate for the vehicle velocity is determined. Therefore, the driving stability of the vehicle can be improved.

[Application Example 9]

The vehicle according to Application Example 8,
wherein the controller is configured to determine the third type control value so that the angular acceleration-torque ratio when a magnitude of the vehicle velocity is smaller than a third threshold value is larger than the angular acceleration-torque ratio when a magnitude of the vehicle velocity is larger than the third threshold value.
According to this configuration, the third type control value is determined so that when the magnitude of the vehicle velocity is smaller than the third threshold value, the angular acceleration-torque ratio is larger as compared to when the magnitude of the vehicle velocity is larger than the third threshold value, and therefore unintended change in the lean angle can be suppressed.

[Application Example 10]

The vehicle according to any one of Application Examples 1 to 9, including
a lean actuator configured to apply to the vehicle body a lean torque for controlling the lean angle of the vehicle body.
According to this configuration, the lean angle can be changed properly by using the lean torque.

[Application Example 11]

The vehicle according to any one of Application Examples 1 to 10,
wherein the N wheels include three or more wheels including a pair of wheels spaced apart from each other in the width direction;
wherein the vehicle comprises:

a lean device configured to lean the vehicle body in the width direction; and
a lock device configured to lock the lean device, and

wherein the controller is configured to:

if a magnitude of the vehicle velocity is equal to or larger than a fourth threshold value,

cause the lock device to unlock the lean device, and
control the turning actuator according to the target turning torque, and

if a magnitude of the vehicle velocity is smaller than the fourth threshold value,

cause the lock device to lock the lean device, and
cause the turning actuator to output the turning torque that causes the supporting member to turn in the target direction.

According to this configuration, the lean device is locked by the lock device during lower velocity, and therefore the lean angle is suppressed from becoming unstable.
It should be noted that the techniques disclosed in this specification can be realized in a variety of aspects, for example, a vehicle, a vehicle controller, a vehicle control method, etc.

Brief Description of the Drawings

Fig. 1 is a right side view of a vehicle 10;
Fig. 2 is a top view of the vehicle 10;
Fig. 3 is a bottom view of the vehicle 10;
Fig. 4 is a rear view of the vehicle 10;
Fig. 5(A) and (B) is simplified rear views of the vehicle 10;
Fig. 6(A) and (B) is simplified rear views of the vehicle 10;
Fig. 7 is an explanatory diagram showing a balance of forces during turning;
Fig. 8 is an explanatory diagram showing a simplified relationship between a wheel angle AF and a turning radius R;
Fig. 9 is an explanatory diagram illustrating forces which act on a rotating front wheel 12F;
Fig. 10 is a block diagram showing a configuration relating to control of the vehicle 10;
Fig. 11 is a flowchart showing an example control process;
Fig. 12 is a block diagram showing a controller 100;
Fig. 13 is a flowchart showing an example process of a first control;
Fig. 14 (A)-(D) shows explanatory diagrams of turning torque and lean torque;
Fig. 15 is a perspective view of the front wheel 12F;
Fig. 16 is a flowchart showing an example process for determining a first control value Vc1;
Fig. 17 is a flowchart showing an example process for determining a second control value Vc2;
Fig. 18 is a flowchart showing an example process for determining a third control value Vc3;

Fig. 19(A) is a graph showing an example correspondence relationship between a vehicle velocity V and a first P gain Kp1; Fig. 19(B) is a graph showing example correspondence relationships between the vehicle velocity V and a second P gain Kp2; Fig. 19(C) is a graph showing example correspondence relationships between the vehicle velocity V and a third P gain Kp3;

Fig. 20 is a flowchart showing another embodiment of control process; and

Fig. 21 is a flowchart showing an example process of a third control.

Detailed Description of the Invention

A. First Embodiment:

A1. Configuration of Vehicle 10:

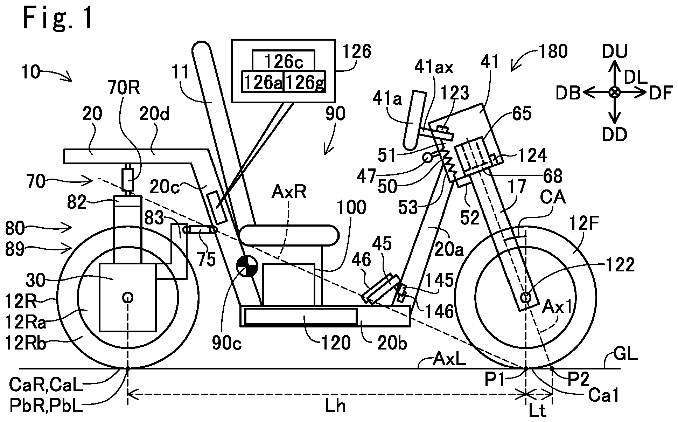

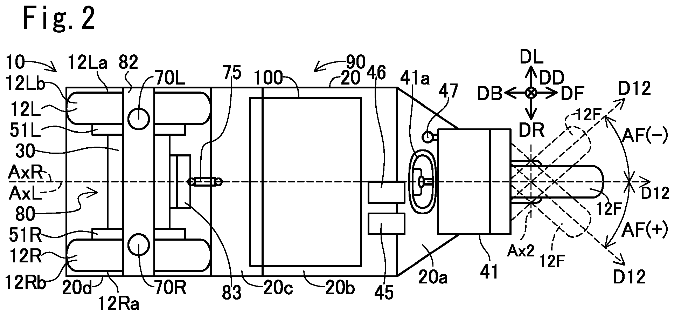

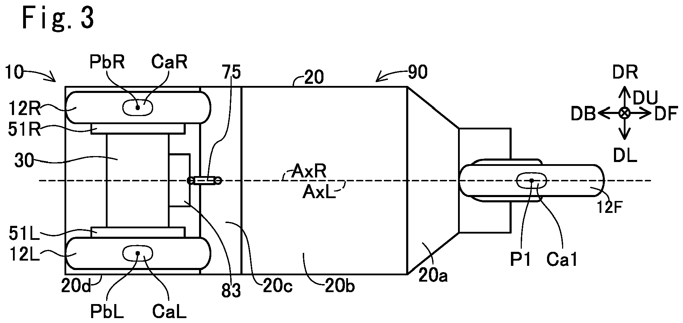

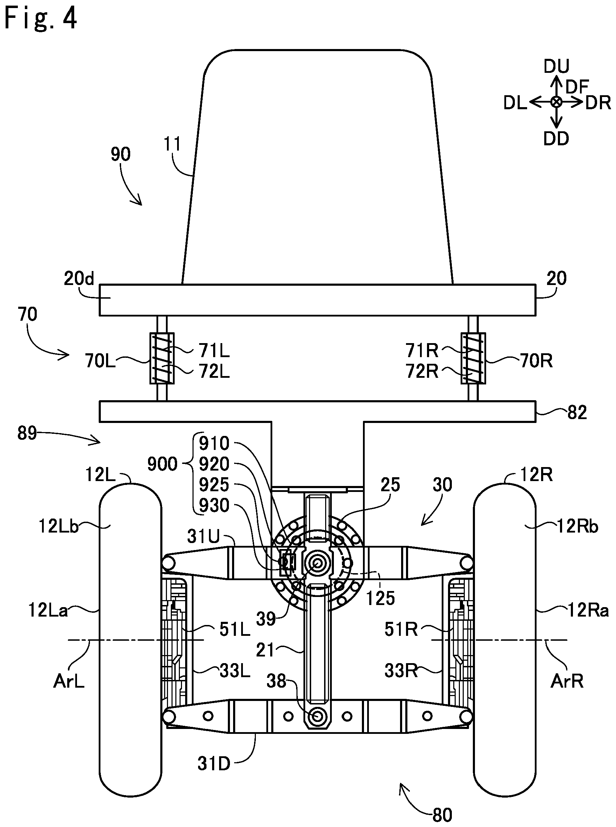

Figs. 1-4 show explanatory diagrams which illustrate a vehicle 10 as one embodiment. Fig. 1 shows a right side view of the vehicle 10, Fig. 2 shows a top view of the vehicle 10, Fig. 3 shows a bottom view of the vehicle 10, and Fig. 4 shows a rear view of the vehicle 10. In Figs. 1-4, the vehicle 10 is shown that is located on a horizontal ground GL (Fig. 1), and thus does not lean. In Figs. 2-4, only the components for use in illustration are shown that are included in the vehicle 10 configuration shown in Fig. 1, and the remaining components are omitted. In Figs. 1-4, six directions DF, DB, DU, DD, DR, and DL are shown. The front direction DF is a direction of forward movement of the vehicle 10, and the back direction DB is opposite to the front direction DF. The upward direction DU is a vertically upward direction, and the downward direction DD is opposite to the upward direction DU. The right direction DR is a right direction viewed from the vehicle 10 traveling in the front direction DF, and the left direction DL is opposite to the right direction DR. All the directions DF, DB, DR, and DL are horizontal directions. The right and left directions DR and DL are perpendicular to the front direction DF.

In this embodiment, this vehicle 10 is a small single-seater vehicle. The vehicle 10 (Figs. 1 and 2) is a tricycle which includes a vehicle body 90, a single front wheel 12F, and two rear wheels 12L and 12R. The front wheel 12F, which is an example turn wheel turnable to right and left, and is located at the center of the vehicle 10 in its width direction (i.e. a direction parallel to the right direction DR). The rear wheels 12L, 12R are drive wheels, and are spaced apart from each other symmetrically with regard to the center of the vehicle 10 in its width direction.

The vehicle body 90 (Fig. 1) has a main body 20. The main body 20 has a front portion 20a, a bottom portion 20b, a rear portion 20c, and a support portion 20d. The bottom portion 20b is a horizontal plate-like portion. The front portion 20a is a plate-like portion which extends from the end of the bottom portion 20b in the front direction DF side toward the upward direction DU side. The rear portion 20c is a plate-like portion which extends from the end of the bottom portion 20b in the back direction DB side toward the upward direction DU side. The support portion 20d is a plate-like portion which extends from the top of the rear portion 20c toward the back direction DB. For example, the main body 20 has a metal frame, and panels attached to the frame.

The vehicle body 90 further includes a seat 11 attached onto the bottom portion 20b, an accelerator pedal 45 and a brake pedal 46 located on the front direction DF side of the seat 11, a controller 100 attached onto the bottom portion 20b, a battery 120, a front wheel support device 41 attached to the end in the upward direction DU side of the front portion 20a, and a shift switch 47 attached to the front wheel support device 41. Other members (e.g. roof, headlight, etc.) may be attached to the main body 20 although they are not shown in the figures. The vehicle body 90 includes the members attached to the main body 20.

The shift switch 47 is a switch for selecting a driving mode of the vehicle 10. In this embodiment, it is possible to select a mode from among four driving modes, "drive," "neutral," "reverse," and "parking." The "drive" mode is a mode for moving forward by driving the drive wheels 12L, 12R, the "neutral" mode is a mode in which the drive wheels 12L, 12R can rotate freely, the "reverse" mode is a mode for moving backward by driving the drive wheels 12L, 12R, the "parking" mode is a mode in which at least one wheel (e.g. rear wheels 12L, 12R) cannot rotate. The "drive" and "neutral" modes are typically used when the vehicle 10 moves forward.

The front wheel support device 41 (Fig. 1) is a device that supports the front wheel 12F turnably about a turning axis Ax1. The front wheel support device 41 includes a front fork 17, a bearing 68, and a steering motor 65. For example, the front fork 17, which rotatably supports the front wheel 12F, is a telescopic fork with a built-in suspension (coil spring and shock absorber). The bearing 68 couples the main body 20 (in this example, the front portion 20a) and the front fork 17. The bearing 68 supports the front fork 17 (and thus the front wheel 12F) turnably about the turning axis Ax1 to right and left relative to the body 90. The steering motor 65 is an electric motor as an example actuator for turning the front fork 17. The steering motor 65 includes a rotor and a stator (not shown). One of the rotor or stator is attached to the front fork 17, and the other is attached to the main body 20 (the front portion 20a, in this case).

The vehicle 10 is equipped with a steering wheel 41a that is rotatable to right and left. The steering wheel 41a is an example operation input unit that is configured to be handled to input a turning direction and a degree of turn. The rotational direction of the steering wheel 41a (right or left) relative to a predetermined straight movement direction represents a turning direction desired by the user. The rotational angle of the steering wheel 41a relative to the straight movement direction (hereinafter sometimes referred to as "steering wheel angle") represents a degree of turn desired by the user. In this embodiment, "steering wheel angle = 0" indicates straight movement, "steering wheel angle > 0" indicates a right turn, and "steering wheel angle < 0" indicates a left turn. In this manner, the positive and negative signs of steering wheel angle represent the turning direction. The absolute value of steering wheel angle represents the degree of turn. Such a steering wheel angle is an example operation amount that represents the turning direction and the degree of turn input to the steering wheel 41a.

In this embodiment, secured to the steering wheel 41a is a supporting rod 41ax which extends along the rotational axis of the steering wheel 41a. The supporting rod 41ax is coupled to the front wheel support device 41 rotatably about its rotational axis.

The wheel angle AF (Fig. 2) is an angle with respect to the front direction DF of a moving direction D12 in which the front wheel 12F rolls when the vehicle 10 is viewed in the downward direction DD. The moving direction D12 is perpendicular to the rotational axis Ax2 of the front wheel 12F. In this embodiment, "AF=0" indicates that "direction D12=front direction DF." "AF>0" indicates that the direction D12 turns toward the right direction DR side (i.e. turning direction = right direction DR). "AF<0" indicates that the direction D12 turns toward the left direction DL side (i.e. turning direction = left direction DL).

The steering motor 65 is controlled by the controller 100 (Fig. 1). Hereinafter, the torque generated by the steering motor 65 may be referred to as turning torque. When the turning torque is smaller, the direction D12 of the front wheel 12F is allowed to turn to right and left independently of the steering wheel angle. The steering motor 65 will be discussed in detail later.

An angle CA shown in Fig. 1 indicates an angle between the vertically upward direction DU and a direction along the turning axis Ax1 toward the vertically upward direction DU side (sometimes referred to as caster angle). In this embodiment, the caster angle CA is larger than zero. If the caster angle CA is larger than zero, the direction along the turning axis Ax1 toward the vertically upward direction DU side is tilted diagonally backward.

Also, as shown in Fig. 1, in this embodiment, the intersection point P2 between the turning axis Ax1 of the front wheel support device 41 and the ground GL is located on the front direction DF side of the contact center P1 of the front wheel 12F with the ground GL. The distance Lt in the back direction DB between these points PI, P2 is referred to as a trail. A positive trail Lt indicates that the contact center P1 is located on the back direction DB side of the intersection point P2. As shown in Figs. 1 and 3, the contact center P1 represents a center of contact area Ca1 between the front wheel 12F and the ground GL. The center of contact area is a gravity center of contact area, and more specifically is a position of gravity center on the assumption that the mass is distributed evenly across the area. A contact center PbR of contact area CaR between the right rear wheel 12R and the ground GL, and a contact center PbL of contact area CaL between the left rear wheel 12L and the ground GL are identified in a similar manner.

The two rear wheels 12L, 12R (Fig. 4) are rotatably supported by a rear wheel support 80. The rear wheel support 80 includes a link mechanism 30, a lean motor 25 mounted on the top of the link mechanism 30, a first support portion 82 attached onto the top of the link mechanism 30, and a second support portion 83 attached to the front of the link mechanism 30 (Fig. 1). In Fig. 1, for purposes of illustration, portions of the link mechanism 30, first support portion 82, and second support portion 83 which are hidden by the right rear wheel 12R are also depicted in solid lines. In Fig. 2, for purposes of illustration, the rear wheel support 80, rear wheels 12L, 12R, and connector rod 75 which are hidden by the main body 20 are depicted in solid lines. In Figs. 1-3, the link mechanism 30 is depicted simply.

The first support portion 82 (Fig. 4) includes a plate-like section which extends parallel to the right direction DR on the upward direction DU side of the rear wheels 12L, 12R. The second support portion 83 (Fig. 1, Fig. 2) is located on the front direction DF side of the link mechanism 30 between the left rear wheel 12L and the right rear wheel 12R.

The right rear wheel 12R (Fig. 1) includes a wheel 12Ra, and a tire 12Rb mounted on the wheel 12Ra. The wheel 12Ra (Fig. 4) is connected to a right electric motor 51R. The right electric motor 51R has a stator and a rotor (not shown). One of the rotor or stator is attached to the wheel 12Ra, and the other is attached to the rear wheel support 80. The rotational axis of the right electric motor 51R is the same as that of the wheel 12Ra, and is parallel to the right direction DR. The configuration of the left rear wheel 12L is similar to that of the right rear wheel 12R. Specifically, the left rear wheel 12L has a wheel 12La and a tire 12Lb. One of the rotor or stator of the left electric motor 51L is attached to the wheel 12La, and the other is attached to the rear wheel support 80. These electric motors 51L, 51R are in-wheel motors which directly drive the rear wheels 12L, 12R.

Figs. 1 and 4 show a state where the vehicle body 90 does not lean but stands upright on the horizontal ground GL (that is, a state where a lean angle T described later is equal to zero). In this state, a rotational axis ArL (Fig. 4) of the left rear wheel 12L and a rotational axis ArR of the right rear wheel 12R are aligned on a same line. As shown in Figs. 1 and 3, the contact center PbR between the right rear wheel 12R and the ground GL, and the contact center PbL between the left rear wheel 12L and the ground GL are located at approximately the same position in the front direction DF.

The link mechanism 30 (Fig. 4) is a so-called parallel linkage. The link mechanism 30 includes three longitudinal link members 33L, 21, 33R arranged in order toward the right direction DR, and two lateral link members 31U, 31D arranged in order toward the downward direction DD. When the vehicle body 90 stands upright without leaning on the horizontal ground GL, the longitudinal link members 33L, 21, 33R are parallel to the vertical direction, and the lateral link members 31U, 31D are parallel to the horizontal direction. The two longitudinal link members 33L, 33R, and the two lateral link members 31U, 31D form a parallelogram link mechanism. The upper lateral link member 31U couples the upper ends of the longitudinal link members 33L, 33R. The lower lateral link member 31D couples the lower ends of the longitudinal link members 33L, 33R. The center longitudinal link member 21 couples the centers of the lateral link members 31U, 31D. These link members 33L, 33R, 31U, 31D, 21 are mutually coupled rotatably, and their rotational axes are parallel to the front direction DF. The left electric motor 51L is attached to the left longitudinal link member 33L. The right electric motor 51R is attached to the right longitudinal link member 33R. On the top of the center longitudinal link member 21, the first support portion 82 and second support portion 83 (Fig. 1) are secured. The link members 33L, 21, 33R, 31U, 31D, and the support portions 82, 83 are made of metal, for example.

In this embodiment, the link mechanism 30 has bearings for rotatably coupling link members. For example, a bearing 38 rotatably couples the lower lateral link member 31D to the center longitudinal link member 21, and a bearing 39 rotatably couples the upper lateral link member 31U to the center longitudinal link member 21. Other portions rotatably coupling link members are also provided with bearings although they are not specifically described here.

The lean motor 25, which is an example actuator for actuating the link mechanism 30, is an electric motor having a stator and a rotor, in this embodiment. One of the stator or rotor of the lean motor 25 is secured to the center longitudinal link member 21, and the other is secured to the upper lateral link member 31U. The rotational axis of the lean motor 25 is the same as that of the bearing 39, and is located at the center of the vehicle 10 in its width direction. When the rotor of the lean motor 25 rotates relative to the stator, the upper lateral link member 31U is tilted with respect to the center longitudinal link member 21. This causes the vehicle 10 to lean. Hereinafter, the torque generated by the lean motor 25 may be referred to as lean torque. The lean torque is for controlling the lean angle of the vehicle body 90.

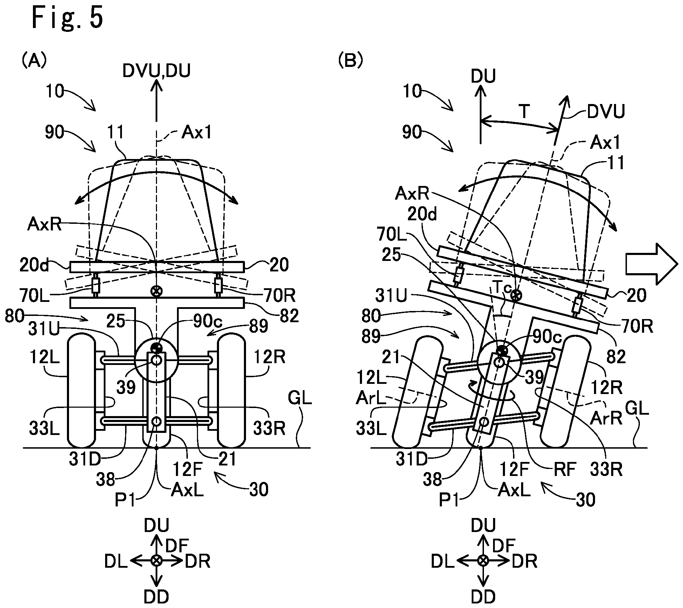

Fig. 5(A), Fig. 5(B) show schematic diagrams of the states of the vehicle 10 on the horizontal ground GL. These figures show simplified rear views of the vehicle 10. Fig. 5(A) shows the state in which the vehicle 10 stands upright while Fig. 5(B) shows the state in which the vehicle 10 leans. As shown in Fig. 5(A), when the upper lateral link member 31U is perpendicular to the center longitudinal link member 21, all of the wheels 12F, 12L, 12R stand upright relative to the horizontal ground GL. Also, the whole vehicle 10 including the vehicle body 90 stands upright relative to the ground GL. A vehicle upward direction DVU in the figure represents the upward direction of the vehicle 10. With the vehicle 10 not leaning, the vehicle upward direction DVU is the same as the upward direction DU. In this embodiment, an upward direction predetermined for the vehicle body 90 is used as the vehicle upward direction.

As shown in the rear view of Fig. 5(B), when the center longitudinal link member 21 rotates clockwise relative to the upper lateral link member 31U, the right rear wheel 12R moves toward the vehicle upward direction DVU side while the left rear wheel 12L moves toward the opposite direction side. As a result, these wheels 12F, 12L, 12R lean to the right direction DR side relative to the ground GL while all of the wheels 12F, 12L, 12R have contact with the ground GL. Also, the whole vehicle 10 including the vehicle body 90 leans to the right direction DR side relative to the ground GL. In general, when the upper lateral link member 31U is tilted relative to the center longitudinal link member 21, one of the right rear wheel 12R or left rear wheel 12L moves in the vehicle upward direction DVU side while the other moves in an opposite direction side to the vehicle upward direction DVU That is, the link mechanism 30 and the lean motor 25 change the relative position in a direction perpendicular to the rotational axes ArL, ArR of the wheels 12L, 12R, between the pair of wheels 12L, 12R spaced apart from each other in the width direction. As a result, the wheels 12F, 12L, 12R, and thus the whole vehicle 10 including the vehicle body 90 lean relative to the ground GL. As described later, when the vehicle 10 turns to the right direction DR side, the vehicle 10 leans to the right direction DR side. When the vehicle 10 turns to the left direction DL side, the vehicle 10 leans to the left direction DL side.

In Fig. 5(B), the vehicle upward direction DVU is tilted in the right direction DR side relative to the upward direction DU. Hereinafter, when the vehicle 10 is viewed in the front direction DF, the angle between the upward direction DU and the vehicle upward direction DVU is referred to as lean angle T. Where "T>0" indicates a lean to the right direction DR side while "T<0" indicates a lean to the left direction DL side. When the vehicle 10 leans, the whole vehicle 10 including the vehicle body 90 leans to substantially the same direction. Therefore, the lean angle T of the vehicle body 90 can be considered as the lean angle T of the vehicle 10.

A control angle Tc of the link mechanism 30 is also shown in Fig. 5(B). The control angle Tc represents an angle between the orientations of the upper lateral link member 31U and center longitudinal link member 21. "Tc=0" indicates that the center longitudinal link member 21 is perpendicular to the upper lateral link member 31U. "Tc>0" indicates that the center longitudinal link member 21 rotates clockwise relative to the upper lateral link member 31U, as shown in the rear view of Fig. 5(B). "Tc<0" indicates that the center longitudinal link member 21 rotates counterclockwise relative to the upper lateral link member 31U although this state is not illustrated. As shown, the control angle Tc is approximately the same as the lean angle T when the vehicle 10 is located on the horizontal ground GL (i.e. the ground GL perpendicular to the vertically upward direction DU).

As shown in Fig. 5(A) and (B), a lean axis AxL is located on the ground GL. The link mechanism 30 and the lean motor 25 can cause the vehicle 10 to lean to right and left about the lean axis AxL. In this embodiment, the lean axis AxL is a straight line which passes through a contact center P1 between the front wheel 12F and the ground GL, and which is parallel to the front direction DF. The link mechanism 30 for rotatably supporting the rear wheels 12L, 12R, and the lean motor 25 constitute a lean device 89 configured to lean the vehicle body 90 in the width direction of the vehicle 10.

The lateral link member 31U is connected via the longitudinal link members 33L, 33R and the motors 51L, 51R to the wheels 12L, 12R. The center longitudinal link member 21 is connected via the first support portion 82 and a suspension system 70 (described later) to the vehicle body 90. The lean motor 25 applies to the members 31U and 21 a force that changes the relative position between the member 31U connected to the wheels 12L, 12R and the member 21 connected to the vehicle body 90 (in this case, a torque that changes the orientation of the member 21 relative to the member 31U).

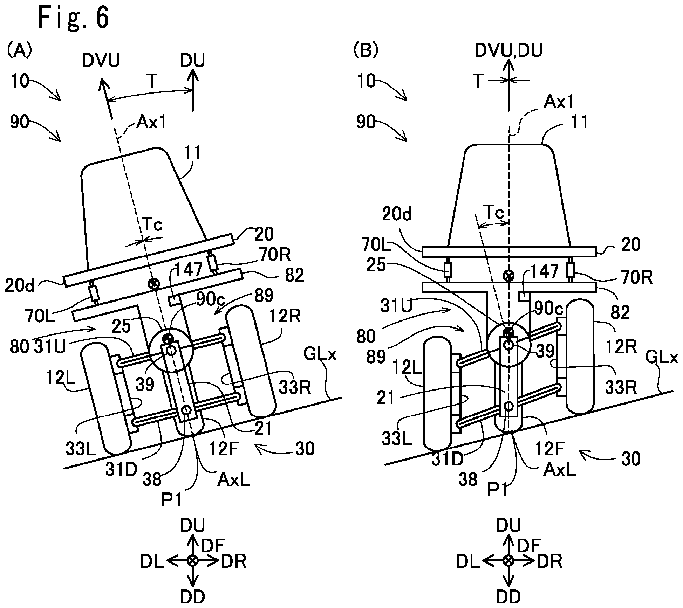

Fig. 6(A), Fig. 6(B) show simplified rear views of the vehicle 10 similarly to Fig. 5(A), Fig. 5(B). In Fig. 6(A), Fig. 6(B), the ground GLx is inclined relative to the vertically upward direction DU (higher on the right side, and lower on the left side). Fig. 6(A) shows a state where the control angle Tc is equal to zero. In this state, all of the wheels 12F, 12L, 12R stand upright relative to the ground GLx. And, the vehicle upward direction DVU is perpendicular to the ground GLx, and is tilted in the left direction DL side relative to the vertically upward direction DU.

Fig. 6(B) shows a state where the lean angle T is equal to zero. In this state, the upper lateral link member 31U is approximately parallel to the ground GLx, and is tilted counterclockwise relative to the center longitudinal link member 21. The wheels 12F, 12L, 12R is tilted relative to the ground GL.

In this manner, when the ground GLx is inclined, the magnitude of the lean angle T of the vehicle body 90 can differ from that of the control angle Tc of the link mechanism 30.

In addition, the vehicle 10 (Fig. 4) includes a lock device 900 configured to lock the lean device 89. In this embodiment, the lock device 900 is a friction brake coupled to the center longitudinal link member 21 and to the upper lateral link member 31U. The lock device 900 includes a brake rotor 910 secured to the center longitudinal link member 21, a brake caliper 920 secured to the upper lateral link member 31U, a brake pad 930 secured to the brake caliper 920, and a lock motor 925 for moving the brake caliper 920. The brake caliper 920 is mechanically coupled to the shift switch 47 (e.g. The brake caliper 920 and the shift switch 47 are connected via a wire). When the position of the shift switch 47 indicates the parking mode, the brake caliper 920 pushes the brake pad 930 against the brake rotor 910. As such, the upper lateral link member 31U is unrotatably locked relative to the center longitudinal link member 21. In this manner, the lock device 900 locks the lean device 89. And, the T control angle Tc and thus the lean angle T are fixed. Hereinafter, the state of the lock device 900 locking the lean device 89 is referred to as lock state. The user activates the lock device 900 (i.e. the state of the lock device 900 transitions to the lock state) by shifting the shift switch 47 to the parking position when the vehicle 10 is stopped, for example. This suppresses unintended change in the control angle Tc and thus the lean angle T. When the position of the shift switch 47 does not indicate the parking mode, the brake caliper 920 pulls the brake pad 930 away from the brake rotor 910. As such, the upper lateral link member 31U is allowed to rotate relative to the center longitudinal link member 21. In this manner, the lock device 900 unlocks the lean device 89. And, the T control angle Tc and thus the lean angle T are allowed to change. Hereinafter, the state of the lock device 900 unlocking the lean device 89 is referred to as unlock state. In this manner, the lock device 900 is a mechanical device that can lock the control angle Tc without consuming any electric power. The controller 100 can control the state of the lock device 900 by controlling the lock motor 925.

In this embodiment, the main body 20 is coupled to the rear wheel support 80 via the suspension system 70 and the connector rod 75, as shown in Figs. 2 and 4. The suspension system 70 (Fig. 4) has a left suspension 70L and right suspension 70R that can extend and retract. In this embodiment, each suspension 70L, 70R is a telescopic suspension with built-in coil spring 71L, 71R and shock absorber 72L, 72R. The ends of the suspensions 70L, 70R on the upward direction DU side are rotatably coupled to the support portion 20d of the main body 20 (e.g. via a ball-and-socket joint, hinge, etc.). The ends of the suspensions 70L, 70R on the downward direction DD side are rotatably coupled to the first support portion 82 of the rear wheel support 80 (e.g. via a ball-and-socket joint, hinge, etc.).

The connector rod 75 is a rod which extends in the front direction DF as shown in Figs. 1 and 2. The connector rod 75 is located at the center of the vehicle 10 in its width direction. The end of the connector rod 75 on the front direction DF side is rotatably coupled to the rear portion 20c of the main body 20 (e.g. via a ball-and-socket joint). The end of the connector rod 75 on the back direction DB side is rotatably coupled to the second support portion 83 of the rear wheel support 80 (e.g. via a ball-and-socket joint).

In this manner, the main body 20 (and thus the vehicle body 90) is coupled to the rear wheel support 80 via the suspension system 70 and the connector rod 75. The vehicle body 90 can rotate in its width direction through the extension/retraction of the suspensions 70L, 70R. The roll axis AxR of Fig. 1 represents a central axis about which the vehicle body 90 rotates relative to the rear wheel support 80 in the right direction DR and left direction DL. In this embodiment, the roll axis AxR is a straight line which passes through the contact center P1 between the front wheel 12F and the ground GL, and through the vicinity of the connector rod 75. It should be noted that in this embodiment, the lean axis AxL about which leaning occurs through the lean device 89 is different form the roll axis AxR.

In Fig. 5(A) and (B), the vehicle body 90 which rotates about the roll axis AxR is shown in dotted lines. The roll axis AxR in this figure represents a location of the roll axis AxR on a plane which includes the suspensions 70L, 70R, and which is perpendicular to the front direction DF. As shown in Fig. 5(B), the vehicle body 90 can also rotate about the roll axis AxR to the right direction DR and to the left direction DL even when the vehicle 10 leans.

The vehicle body 90 can rotate in the width direction of the vehicle 10 relative to the vertically upward direction DU (and thus the ground GL) through a rotation by the rear wheel support 80 and a rotation by the suspension system 70 and connector rod 75. The rotation of the vehicle body 90 in its width direction achieved in an integrated manner in the overall vehicle 10 may be referred to as roll. A roll can be also caused by a deformation of the members of the vehicle 10, such as the vehicle body 90 and the tires 12Rb, 12Lb. It should be noted that typically, the rotation about the roll axis AxR is temporary, and its degree is smaller than that of rotation through the lean device 89.

A gravity center 90c is shown in Figs. 1, 5(A), and 5(B). This gravity center 90c is a gravity center of the vehicle body 90 under a full load condition. The full load condition means that the vehicle 10 carries an occupant (and possibly a load) so that the gross weight of the vehicle 10 becomes the acceptable gross weight. For example, no maximum loading weight may be specified, but a maximum riding capacity may be specified. In this case, the gravity center 90c is a gravity center when the vehicle 10 is filled to its maximum riding capacity. A predetermined reference body weight (e.g. 55kg) is adopted as occupant's body weight. Alternatively, a maximum loading weight may be specified in addition to a maximum riding weight. In this case, the gravity center 90c is a gravity center of the vehicle body 90 when the vehicle 10 is filled to its maximum riding capacity and maximum loading capacity.

As shown, the gravity center 90c is located on the downward direction DD side of the roll axis AxR. Therefore, if the vehicle body 90 oscillates about the roll axis AxR, an excessive increase in amplitude of oscillation can be suppressed. In this embodiment, the battery 120, which is a relatively heavy element among the elements of the vehicle body 90 (Fig. 1), is located in a lower position in order to locate the gravity center 90c on the downward direction DD side of the roll axis AxR. Specifically, the battery 120 is secured to the bottom portion 20b, which is the lowest portion among the main body 20 of the vehicle body 90. Therefore, the gravity center 90c can be easily made lower than the roll axis AxR.

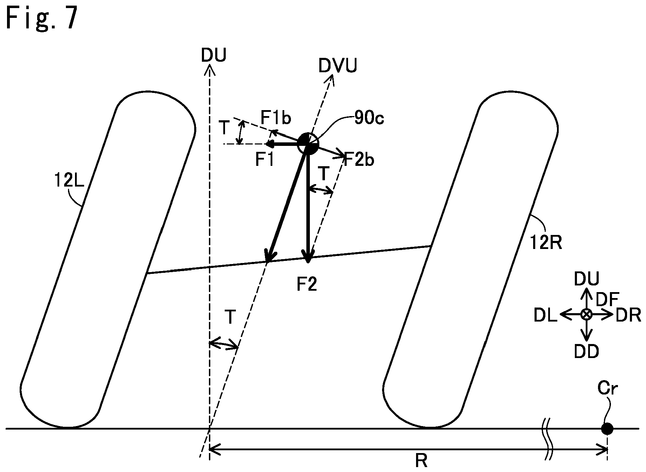

Fig. 7 shows an explanatory diagram illustrating a balance of forces during turning. This figure shows a rear view of the rear wheels 12L, 12R during turning to right. As described later, when the turning direction is the right direction, the controller 100 (Fig. 1) can control the lean motor 25 and the steering motor 65 so that the rear wheels 12L, 12R (and thus the vehicle 10) lean relative to the ground GL to the right direction DR.

A first force F1 in the figure is a centrifugal force acting on the vehicle body 90. A second force F2 is a gravity acting on the vehicle body 90. Where the mass of the vehicle body 90 is m (kg), the acceleration of gravity is g (about 9.8m/s$^2$), the lean angle of the vehicle 10 relative to the vertical direction is T (degrees), the velocity of the vehicle 10 during turning is V (m/s), and the turning radius is R (m). The first force F1 and the second force F2 are expressed in Equations 1 and 2, respectively:

$$F1 = (m*V^2)/R \quad \text{(Equation 1)}$$

$$F2 = m*g \quad \text{(Equation 2)}$$

Where * represents a multiplication sign (hereinafter the same shall apply).

In addition, a force F1b in the figure is a component of the first force F1 in a direction perpendicular to the vehicle upward direction DVU. A force F2b is a component of the second force F2 in a direction perpendicular to the vehicle upward direction DVU The force F1b and the force F2b are expressed in Equations 3 and 4, respectively:

$$F1b = F1*\cos(T) \quad \text{(Equation 3)}$$

$$F2b = F2*\sin(T) \quad \text{(Equation 4)}$$

Where "cos()" is a cosine function, and "sin()" is a sine function (hereinafter the same shall apply).

The force F1b is a component which causes the vehicle upward direction DVU to be rotated to the left direction DL side while the force F2b is a component which causes the vehicle upward direction DVU to be rotated to the right direction DR side. When the vehicle 10 continues to turn stably with the lean angle T (and furthermore the velocity V and turning radius R) maintained, the relationship between F1b and F2b is expressed in the following equation 5:

$$F1b = F2b \quad \text{(Equation 5)}$$

By substituting Equations 1-4 as discussed above into Equation 5, the turning radius R is expressed in Equation 6:

$$R = V^2/(g*\tan(T)) \quad \text{(Equation 6)}$$

Where "tan()" is a tangent function (hereinafter the same shall apply).

Equation 6 is established independently of the mass m of the vehicle body 90. Equation 6a below, which is obtained by substituting "T" in Equation 6 with a parameter Ta (in this case, absolute value of lean angle T) representing the magnitude of the lean angle without distinction between the right and left directions, is true regardless of the lean direction of the vehicle body 90:

$$R = V^2/(g*\tan(Ta)) \quad \text{(Equation 6a)}$$

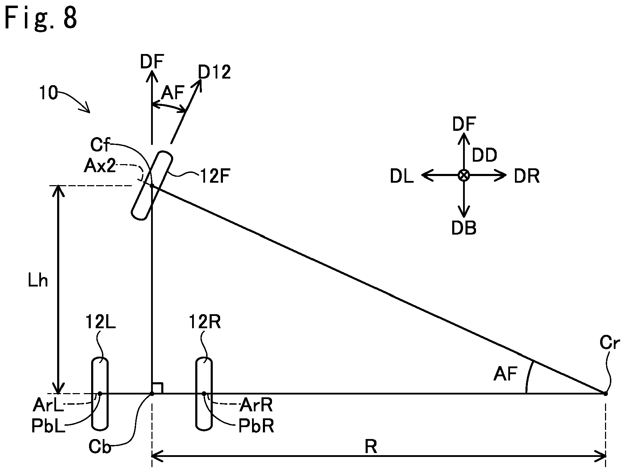

Fig. 8 is an explanatory diagram showing a simplified relationship between the wheel angle AF and the turning radius R. This figure shows the wheels 12F, 12L, 12R viewed in the downward direction DD. In the figure, the front wheel 12F turns to the right direction DR, and thus the vehicle 10 turns to the right direction DR. A front center Cf in the figure is the center of the front wheel 12F. The front center Cf is located on the rotational axis Ax2 of the front wheel 12F. The front center Cf is located at approximately the same position as the contact center P1 (Fig. 1) when the vehicle 10 is viewed in the downward direction DD. A rear center Cb is the center between the two rear wheels 12L, 12R. The rear center Cb is located at the middle between the rear wheels 12L, 12R on the rotational axes ArL, ArR of the rear wheels 12L, 12R when the vehicle body 90 does not lean. The rear center Cb has the same location as a midpoint between the contact centers PbL, PbR of the two rear wheels 12L, 12R when the vehicle 10 is viewed in the downward direction DD. A center Cr is the turning center (referred to as turning center Cr). A wheelbase Lh is the distance between the front center Cf and the rear center Cb in the front direction DF. As shown in Fig. 1, the wheelbase Lh is the distance between the rotational axis Ax2 of the front wheel 12F and the rotational axes ArL, ArR of the rear wheels 12L, 12R in the front direction DF.

As shown in Fig. 8, the front center Cf, rear center Cb, and turning center Cr form a right angled triangle. The internal angle of the vertex Cb is 90 degrees. The internal angle of the vertex Cr is equal to the wheel angle AF. Therefore, the relationship between the wheel angle AF and the turning radius R is expressed in Equation 7:

$$AF = \arctan(Lh/R) \quad \text{(Equation 7)}$$

Where "arctan()" is an inverse function of tangent function (hereinafter the same shall apply).

It should be noted that there are a variety of difference between the actual behavior of the vehicle 10 and the simplified behavior in Fig. 8. For example, the actual wheels 12F, 12L, 12R can slip relative to the ground GL. In addition, the actual front wheel 12F and rear wheels 12L, 12R lean. Therefore, the actual turning radius may be different from the turning radius R in Equation 7. However, Equation 7 can be used as a good approximate equation which represents the relationship between the wheel angle Af and the turning radius R.

When the vehicle 10 leans to the right direction DR side during its forward movement as shown in Fig. 5(B), the gravity center 90c of the vehicle body 90 moves to the right direction DR side, and thus the traveling direction of the vehicle 10 changes to the right direction DR side. The front wheel support device 41 (Fig. 1) (and thus the turning axis Ax1 (Fig. 5(B))) also moves to the right direction DR side. On the other hand, the contact center P1 between the front wheel 12F and the ground GL cannot readily move to the right direction DR side due to friction. And, in this embodiment, the wheel 12F has a positive trail Lt as described with regard to Fig. 1. That is, the contact center P1 is located on the back direction DB side of the intersection point P2 between the turning axis Ax1 and the ground GL. As a result, when the vehicle 10 leans to the right direction DR side during its forward movement, the orientation of the front wheel 12F (i.e. moving direction D12 (Fig. 2)) can spontaneously turn to the new traveling direction of the vehicle 10, that is, its lean direction (right direction DR in the example of Fig. 5(B)). A turning direction RF in Fig. 5(B) represents a turning direction of the front wheel 12F about the turning axis Axl when the vehicle body 90 leans to the right direction DR side. When the torque of the steering motor 65 is smaller, the orientation of the front wheel 12F spontaneously turns to the lean direction following beginning of change in the lean angle T. Thus, the vehicle 10 turns toward the lean direction.

In addition, the behavioral stability of the vehicle 10 is improved because the forces F1b, F2b (Fig. 7, Equation 5) balance each other when the turning radius is equal to the turning radius R expressed in Equation 6 (and thus Equation 6a) discussed above. The vehicle 10 turning at the lean angle T will turn in the turning radius R expressed in Equation 6. In addition, the moving direction D12 of the front wheel 12F spontaneously faces the traveling direction of the vehicle 10 because the vehicle 10 has a positive trail Lt. Therefore, when the vehicle 10 turns at the lean angle T, the orientation of the front wheel 12F (i.e. wheel angle AF) can settle at an orientation of the wheel angle AF determined based on the turning radius R expressed in Equation 6, and Equation 7. In this manner, the wheel angle AF changes following a lean of the vehicle body 90.

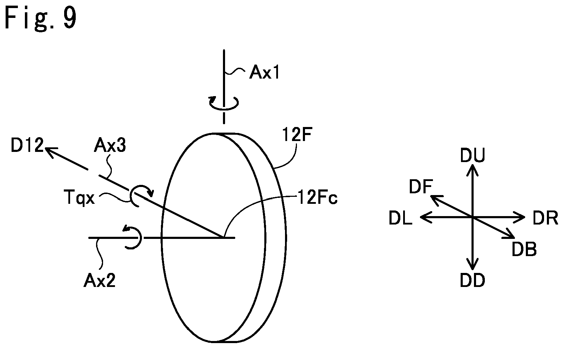

Furthermore, in this embodiment, when the vehicle body 90 leans, the front wheel 12F is subject to a force that rotates the wheel angle AF to the lean direction independently of the trail Lt. Fig. 9 is an explanatory diagram illustrating forces which act on the rotating front wheel 12F. This figure shows a perspective view of the front wheel 12F. In the example of Fig. 9, the direction D12 of the front wheel 12F is the same as the front direction DF. A rotational axis Ax2 is a rotational axis of the front wheel 12F. When the vehicle 10 moves forward, the front wheel 12F rotates about this rotational axis Ax2. The figure shows the turning axis Ax1 of the front wheel support device 41 (Fig. 1) and a front axis Ax3. The turning axis Ax1 extends from the upward direction DU side to the downward direction DD side. The front axis Ax3 is an axis which passes through the gravity center 12Fc of the front wheel 12F and is parallel to the direction D12 of the front wheel 12F. It should be noted that the rotational axis Ax2 of the front wheel 12F also passes through the gravity center 12Fc of the front wheel 12F.

In this embodiment, the front wheel support device 41 is secured to the vehicle body 90. Therefore, when the vehicle body 90 leans, the front wheel support device 41 leans along with the vehicle body 90, and thus the rotational axis Ax2 of the front wheel 12F will also lean to the same direction in a similar fashion. When the vehicle body 90 of the moving vehicle 10 leans to the right direction DR side, the front wheel 12F, which rotates about the rotational axis Ax2, is subject to a torque Tqx that causes the front wheel 12F to lean to the right direction DR side. This torque Tqx includes a component of force that acts to lean the front wheel 12F about the front axis Ax3 to the right direction DR. Such a movement of a rotating object when an external torque is applied to the object is known as precession movement. For example, the rotating object turns about an axis perpendicular to the rotational axis and the axis of the external torque. In the example of Fig. 9, the application of the torque Tqx causes the rotating front wheel 12F to turn about the turning axis Ax1 of the front wheel support device 41 to the right direction DR side. In this manner, due to the angular momentum of the rotating front wheel 12F, the direction D12 of the front wheel 12F (i.e. wheel angle AF) changes following a lean of the vehicle body 90.

The above description refers to the case where the vehicle 10 leans to the right direction DR side. Similarly, the direction D12 of the front wheel 12F (i.e. wheel angle AF) turns to the left direction DL side following the lean of the vehicle body 90 when the vehicle 10 leans to the left direction DL side.

When the torque of the steering motor 65 is smaller, the front wheel support device 41 supports the front wheel 12F as follows. That is, the front wheel 12F can turn to right and left relative to the vehicle body 90 following a change in lean of the vehicle body 90 independently of information input to the steering wheel 41a. For example, even if the steering wheel 41a is maintained in the predetermined direction corresponding to the straight movement, the front wheel 12F can turn to right following a change in the lean angle T when the lean angle T of the vehicle body 90 changes toward right (i.e. the wheel angle AF can change toward right). The front wheel support device 41 supporting the front wheel 12F in this manner may be restated as follows. That is, the front wheel support device 41 supports the front wheel 12F turnably to right and left relative to the vehicle body 90 following a change in lean of the vehicle body 90 so that the wheel angle AF of the front wheel 12F for a single operation amount input to the steering wheel 41a is not restricted to a single wheel angle AF.

As shown in Fig. 1, the front wheel support device 41 has a connection 50 which connects the supporting rod 41ax of the steering wheel 41a to the front fork 17. The connection 50 includes a first portion 51 secured to the supporting rod 41ax, a second portion 52 secured to the front fork 17, and a third portion 53 which connects the first portion 51 and the second portion 52. The connection 50 is connected indirectly to the steering wheel 41a via the supporting rod 41ax, and is connected directly to the front fork 17. The third portion 53 in this embodiment is a viscous damper. When the orientation of the front fork 17 (and thus front wheel 12F) relative to that of the steering wheel 41a changes rapidly, the connection 50 applies a force suppressing the change to the steering wheel 41a and the front fork 17. When the torque of the steering motor 65 is smaller, the direction D12 of the front wheel 12F can change rapidly and unintentionally due to an external factor such as irregularities of road surface. The user can suppress the unintentional, rapid change in the direction D12 of the front wheel 12F by gripping the steering wheel 41a. This can result in improved driving stability.

In addition, the connection 50 allows a moderate change in the orientation of the front fork 17 (and thus front wheel 12F) relative to that of the steering wheel 41a. In this manner, the connection 50 connects loosely the steering wheel 41a and the front fork 17. Such a connection 50 allows the front wheel 12F to turn to right and left relative to the vehicle body 90 following a change in lean of the vehicle body 90 independently of the steering wheel angle input to the steering wheel 41a when the torque of the steering motor 65 is smaller. Therefore, the driving stability is improved because the wheel angle AF can change to an angle appropriate for the lean angle T.

A2. Control of Vehicle 10:

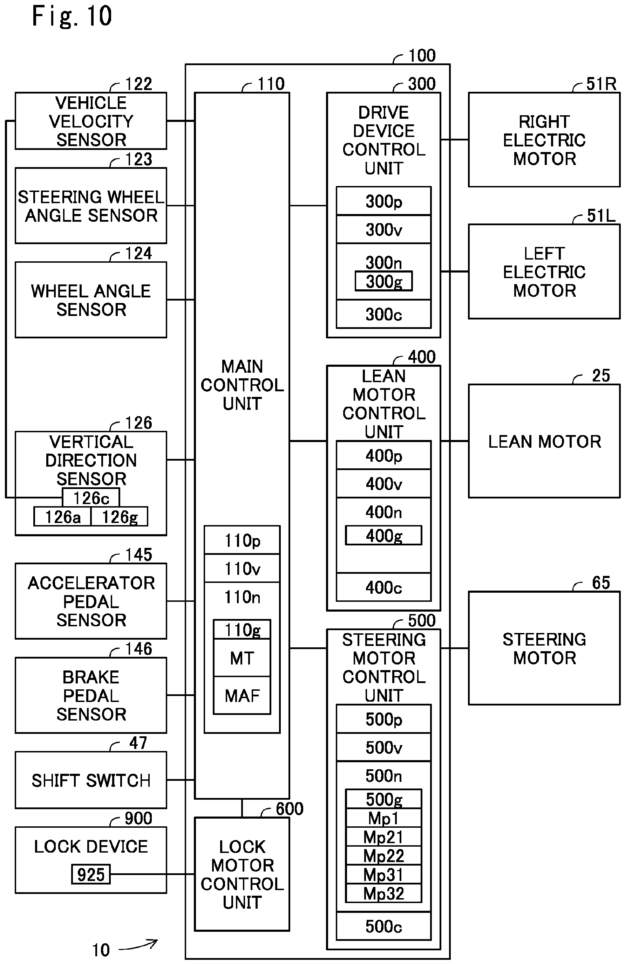

Fig. 10 is a block diagram showing the configuration relating to control of the vehicle 10. The vehicle 10 includes as components for the control a vehicle velocity sensor 122, a steering wheel angle sensor 123, a wheel angle sensor 124, a vertical direction sensor 126, an accelerator pedal sensor 145, a brake pedal sensor 146, a shift switch 47, a lock device 900, a controller 100, a right electric motor 51R, a left electric motor 51L, a lean motor 25, and a steering motor 65.

The vehicle velocity sensor 122 is a sensor for detecting a vehicle velocity of the vehicle 10. In this embodiment, the vehicle velocity sensor 122 is attached on the lower end of the front fork 17 (Fig. 1) to detect a rotational rate of the front wheel 12F, i.e. vehicle velocity.

The steering wheel angle sensor 123 is a sensor for detecting an orientation of the steering wheel 41a (i.e. steering wheel angle). In this embodiment, the steering wheel angle sensor 123 is attached to the supporting rod 41ax secured to the steering wheel 41a (Fig. 1).

The wheel angle sensor 124 is a sensor for detecting a wheel angle AF of the front wheel 12F. In this embodiment, the wheel angle sensor 124 is attached to the steering motor 65 (Fig. 1).

The vertical direction sensor 126 is a sensor for determining the vertically downward direction DD. In this embodiment, the vertical direction sensor 126 includes an acceleration sensor 126a, a gyroscope sensor 126g, and a control unit 126c.

The acceleration sensor is a sensor that detects acceleration in any direction, for example, triaxial accelerometer. Hereinafter, a direction of acceleration detected by the acceleration sensor 126a will be referred to as detected direction. With the vehicle 10 stopped, the detected direction is the same as the vertically downward direction DD. That is, a direction opposite to the detected direction is the vertically upward direction DU.

The gyroscope sensor 126g is a sensor that detects angular acceleration about a rotational axis in any direction, for example, triaxial angular accelerometer.

The control unit 126c is a device that uses a signal from the acceleration sensor 126a and a signal from the gyroscope sensor 126g to determine the vertically downward direction DD. For example, the control unit 126c is a data processor including a computer.

The acceleration sensor 126a and the gyroscope sensor 126g may be secured to a variety of members of the vehicle 10. For example, the acceleration sensor 126a and the gyroscope sensor 126g are secured to the same member. In the embodiment of Fig. 1, the acceleration sensor 126a and the gyroscope sensor 126g (and thus the vertical direction sensor 126) are secured to the rear portion 20c of the main body 20.

When the vehicle 10 is moving, the detected direction can be displaced from the vertically downward direction DD in response to the movement of the vehicle 10. For example, the detected direction is displaced so that it is tilted toward the back direction DB side from the vertically downward direction DD if the vehicle 10 accelerates during its forward movement. The detected direction is displaced so that it is tilted toward the front direction DF side from the vertically downward direction DD if the vehicle 10 decelerates during its forward movement. The detected direction is displaced so that it is tilted toward the right direction DR side from the vertically downward direction DD if the vehicle 10 turns to left during its forward movement. The detected direction is displaced so that it is tilted toward the left direction DL side from the vertically downward direction DD if the vehicle 10 turns to right during its forward movement.

The control unit 126c of the vertical direction sensor 126 uses the vehicle velocity V detected by the vehicle velocity sensor 122 to calculate the acceleration of the vehicle 10. Then, the control unit 126c uses the acceleration to determine the displacement of the detected direction from the vertically downward direction DD due to the acceleration of the vehicle 10 (e.g. the displacement of the detected direction toward the front direction DF or back direction DB is determined). In addition, the control unit 126c uses the angular acceleration detected by the gyroscope sensor 126g to determine the displacement of the detected direction from the vertically downward direction DD due to the angular acceleration of the vehicle 10 (e.g. the displacement of the detected direction toward the right direction DR or left direction DL is determined). The control unit 126c uses the determined displacement to modify the detected direction, and thereby determines the vertically downward direction DD. In this manner, the vertical direction sensor 126 can determine the vertically downward direction DD properly under a variety of driving conditions of the vehicle 10.

The control unit 126c outputs vertically downward direction information indicating the determined vertically downward direction DD. The vertically downward direction information indicates the vertically downward direction DD relative to a predetermined reference direction of the vertical direction sensor 126. In this embodiment, the vertical direction sensor 126 is secured to the vehicle body 90 (more specifically, the main body 20). Accordingly, the correspondence relationship between the vehicle upward direction DVU of the vehicle body 90 and the reference direction of the vertical direction sensor 126 is predetermined (referred to as sensor direction relationship). This sensor direction relationship can be used to convert the vertically downward direction DD indicated by the vertically downward direction information to the vertically downward direction DD relative to the vehicle upward direction DVU of the vehicle body 90.

The accelerator pedal sensor 145 is attached to the accelerator pedal 45 (Fig. 1) in order to detect an accelerator operation amount. The brake pedal sensor 146 is attached to the brake pedal 46 (Fig. 1) in order to detect a brake operation amount.

Each sensor 122, 123, 124, 145, 146 is configured using a resolver or encoder, for example.

The controller 100 includes a main control unit 110, a drive device control unit 300, a lean motor control unit 400, a steering motor control unit 500, and a lock motor control unit 600. The controller 100 operates with electric power from the battery 120 (Fig. 1). In this embodiment, the control units 110, 300, 400, 500 each has a computer. More specifically, the control units 110, 300, 400, 500 include processors 110p, 300p, 400p, 500p (e.g. CPU), volatile memories 110v, 300v, 400v, 500v (e.g. DRAM), and non-volatile memories 110n, 300n, 400n, 500n (e.g. flash memory), respectively. The non-volatile memories 110n, 300n, 400n, 500n store in advance programs 110g, 300g, 400g, 500g for operating the corresponding control units 110, 300, 400, 500, respectively. In addition, the non-volatile memory 110n of the main control unit 110 stores in advance map data MT, MAF. The non-volatile memory 500n of the steering motor control unit 500 stores in advance map data Mp1, Mp21, Mp22, Mp31, and Mp32. The processors 110p, 300p, 400p, 500p perform a variety of processes by executing the corresponding programs 110g, 300g, 400g, 500g, respectively.

The processor 110p of the main control unit 110 receives signals from the sensors 122, 123, 124, 126, 145, 146 and from the shift switch 47, and then controls the vehicle 10 according to the received signals. The processor 110p of the main control unit 110 controls the vehicle 10 by outputting instructions to the drive device control unit 300, the lean motor control unit 400, and the steering motor control unit 500 (described in detail later).

The processor 300p of the drive device control unit 300 controls the electric motors 51L, 51R according to the instruction from the main control unit 110. The processor 400p of the lean motor control unit 400 controls the lean motor 25 according to the instruction from the main control unit 110. The processor 500p of the steering motor control unit 500 controls the steering motor 65 according to the instruction from the main control unit 110. These control units 300, 400, 500 respectively have electric power control modules 300c, 400c, 500c which supply the motors 51L, 51R, 25, 65 under control with electric power from the battery 120. The electric power control modules 300c, 400c, 500c are configured using an electric circuit (e.g. inverter circuit).

Hereinafter, a phrase "a processor 110p, 300p, 400p, 500p of a control unit 110, 300, 400, 500 performs a process" is sometimes expressed briefly as a phrase "a control unit 110, 300, 400, 500 performs a process."

The lock motor control unit 600 includes an electric circuit (e.g. inverter circuit) which supplies the lock motor 925 of the lock device 900 with electric power from the battery 120.

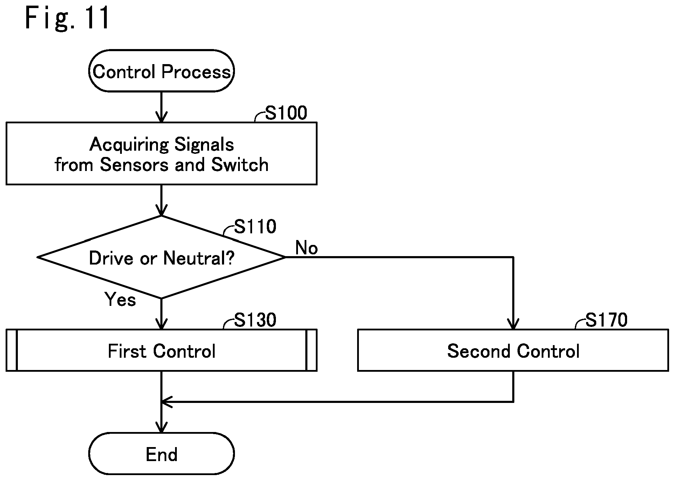

Fig. 11 is a flowchart showing an example control process performed by the controller 100 (Fig. 10). The flowchart of Fig. 11 shows a procedure for controlling the rear wheel support 80 and the front wheel support device 41. In Fig. 11, each process step has a reference number of an alphabet "S" followed by a numeral.

In S100, the main control unit 110 acquires signals from the sensors 122, 123, 124, 126, 145, 146 and from the shift switch 47. Then, the main control unit 110 determines the velocity V, steering wheel angle, wheel angle AF, vertically downward direction DD, accelerator operation amount, brake operation amount, and driving mode.

In S110, the main control unit 110 determines whether or not a condition is met that 'the driving mode is either "drive" or "neutral." The condition in S110 indicates that the vehicle 10 is moving forward. If the determination result in S110 is "Yes," the main control unit 110 proceeds to S130.

In S130, the controller 100 controls the lean motor 25 and the steering motor 65 so that the vehicle 10 moves in the direction mapped to the steering wheel angle. The outline of S130 is as follows. The main control unit 110 uses the steering wheel angle and the vehicle velocity V to determine a first target lean angle T1. The first target lean angle T1 represents a target value of the lean angle T. As described later, the absolute value of the first target lean angle T1 is increased with an increase in the absolute value of the steering wheel angle. When the vehicle body 90 is caused to rotate in its width direction so that the lean angle T approaches the first target lean angle T1, the rotational direction of the vehicle body 90 is referred to as target direction. The target direction is either right direction or left direction. The lean motor control unit 400 causes the lean motor 25 to output a lean torque in the target direction so that the lean angle T approaches the first target lean angle T1. In addition, the steering motor control unit 500 can cause the steering motor 65 to output a torque for turning the front wheel 12F in a direction opposite to the target direction. Accordingly, the vehicle 10 properly moves toward the direction corresponding to the steering wheel angle. The process of S130 will be discussed in detail later.

If the driving mode is not "drive" or "neutral" (i.e. if the driving mode is either "reverse" or "parking"), the determination result in S110 is "No." Accordingly, the main control unit 110 proceeds to S170.

In S170, the main control unit 110 determines the first target lean angle T1 in a similar manner to S130. The main control unit 110 supplies the lean motor control unit 400 with an instruction for controlling the lean motor 25 so that the lean angle T is equal to the first target lean angle T1. According to the instruction, the lean motor control unit 400 activates the lean motor 25 so that the lean angle T is equal to the first target lean angle T1. The lean motor control unit 400 performs a feedback control of the lean motor 25 which uses a difference between the lean angle T and the first target lean angle T1 (e.g. a so-called PID (Proportional Integral Derivative) control).

Also, the main control unit 110 uses the steering wheel angle and the vehicle velocity V to determine a first target wheel angle AFt1. Information which represents the correspondence relationship between the first target wheel angle AFt1 and the steering wheel angle and vehicle velocity V is predefined by the map data MAF stored in the non-volatile memory 110n of the main control unit 110 (Fig. 10). The main control unit 110 references this map data MAF to identify the first target wheel angle AFt1 corresponding to the combination of steering wheel angle and vehicle velocity V.

In this embodiment, the correspondence relationship between the steering wheel angle and vehicle velocity V and the first target wheel angle AFt1 is the same as that between the first target lean angle T1 and vehicle velocity V and the wheel angle AF determined using the above Equations 6, 7. Accordingly, the same first target wheel angle AFt1 can be determined using the first target lean angle T1 and the vehicle velocity V. For example, the map data MAF may define the correspondence relationship between the combination of first target lean angle T1 and vehicle velocity V and the first target wheel angle AFt1. Then, the main control unit 110 may use the first target lean angle T1 and the vehicle velocity V to determine the first target wheel angle AFt1.

The main control unit 110 supplies the steering motor control unit 500 with an instruction for controlling the steering motor 65 so that the wheel angle AF is equal to the first target wheel angle AFt1. According to the instruction, the steering motor control unit 500 activates the steering motor 65 so that the wheel angle AF is equal to the first target wheel angle AFt1. The steering motor control unit 500 performs a feedback control of the steering motor 65 which uses a difference between the wheel angle AF and the first target wheel angle AFt1 (e.g. a so-called PID (Proportional Integral Derivative) control).

Accordingly, the vehicle 10 properly moves toward the direction corresponding to the steering wheel angle.

In response to S130 or S170 being performed, the process of Fig. 11 ends. The controller 100 repeatedly performs the process of Fig. 11. If the condition for performing S130 is met (SI10: Yes), the controller 100 continues to S130. If the condition for performing S170 is met (S110: No), the controller 100 continues to S170. As a result, the vehicle 10 moves toward a traveling direction appropriate to the steering wheel angle.

The main control unit 110 (Fig. 10) and the drive device control unit 300 serve as a drive control unit for controlling the electric motors 51L, 51R according to the accelerator operation amount and brake operation amount although not illustrated. In this embodiment, the main control unit 110 supplies the drive device control unit 300 with an instruction for increasing output power of the electric motors 51L, 51R when the accelerator operation amount is increased. According to the instruction, the drive device control unit 300 controls the electric motors 51L, 51R so as to increase their output power. The main control unit 110 supplies the drive device control unit 300 with an instruction for decreasing output power of the electric motors 51L, 51R when the accelerator operation amount is decreased. According to the instruction, the drive device control unit 300 controls the electric motors 51L, 51R so as to decrease their output power.

The main control unit 110 supplies the drive device control unit 300 with an instruction for decreasing output power of the electric motors 51L, 51R when the brake operation amount becomes larger than zero. According to the instruction, the drive device control unit 300 controls the electric motors 51L, 51R so as to decrease their output power. It should be noted that the vehicle 10 preferably has a brake device which frictionally reduces rotational rate of at least one of all the wheels 12F, 12L, 12R. In addition, the brake device preferably reduces the rotational rate of the at least one wheel when the user steps on the brake pedal 46.

A3. Control Process:

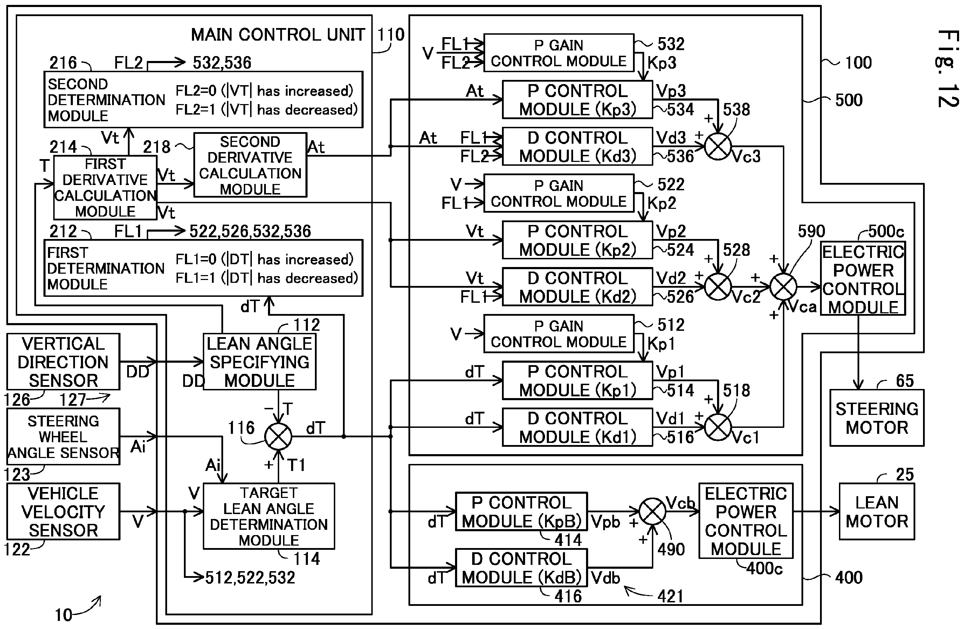

The control process of S130 (Fig. 11) will be described below. Fig. 12 is a block diagram showing a portion of the controller 100 which is related to the control of the lean motor 25 and the steering motor 65. The main control unit 110 includes a lean angle specifying module 112, a target lean angle determination module 114, a summing point 116, a first determination module 212, a first derivative calculation module 214, a second determination module 216, and a second derivative calculation module 218. The steering motor control unit 500 includes a first P gain control module 512, a first P control module 514, a first D control module 516, a first summing point 518, a second P gain control module 522, a second P control module 524, a second D control module 526, a second summing point 528, a third P gain control module 532, a third P control module 534, a third D control module 536, a third summing point 538, a fourth summing point 590, and an electric power control module 500c. The lean motor control unit 400 includes a P control module 414, a D control module 416, a summing point 490, and an electric power control module 400c.

The processing modules 112, 114, 116, 212, 214, 216, 218 of the main control unit 110 are implemented by the processor 110p of the main control unit 110 (Fig. 10). The processing modules 414, 416, 490 of the lean motor control unit 400 are implemented by the processor 400p of the lean motor control unit 400. The processing modules 512, 514, 516, 518, 522, 524, 526, 528, 532, 534, 536, 538, 590 of the steering motor control unit 500 are implemented by the processor 500p of the steering motor control unit 500. Hereinafter, a phrase "the processor 110p, 400p, 500p performs a process as the processing modules 112, 114, 116, 212, 214, 216, 218, 414, 416, 490, 512, 514, 516, 518, 522, 524, 526, 528, 532, 534, 536, 538, 590" may be expressed as a phrase "the processing modules 112, 114, 116, 212, 214, 216, 218, 414, 416, 490, 512, 514, 516, 518, 522, 524, 526, 528, 532, 534, 536, 538, 590 perform a process."

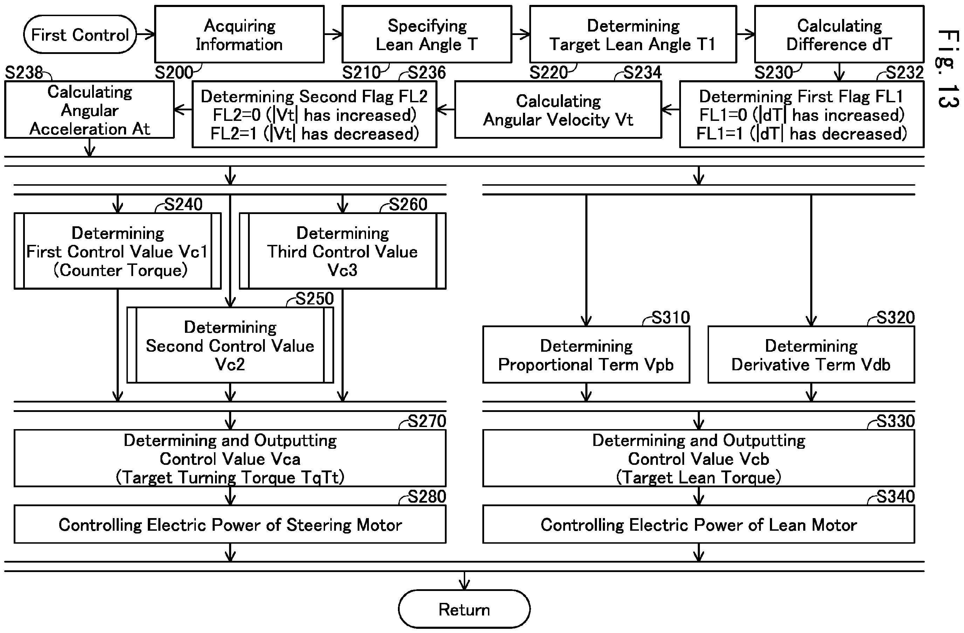

Fig. 13 is a flowchart showing an example process of a first control (Fig. 11: S130). In S200, the main control unit 110 acquires information indicative of the vehicle velocity V, the steering wheel angle Ai, and the vertically downward direction DD from the sensors 122, 123, and 126, respectively.

In S210, the lean angle specifying module 112 (Fig. 12) uses the vertically downward direction DD to calculate the lean angle T. As described above, the sensor direction relationship between the vehicle upward direction DVU of the vehicle body 90 and the reference direction of the vertical direction sensor 126 is predetermined. The lean angle specifying module 112 uses this sensor direction relationship to calculate the lean angle T, which is an angle between the upward direction DU (i.e. a direction opposite to the vertically downward direction DD) and the vehicle upward direction DVU The calculated lean angle T is an angle between the vertically upward direction DU and the vehicle upward direction DVU when the vehicle 10 is viewed in the front direction DF. It should be noted that the portion of the controller 100 which operates as the lean angle specifying module 112, and the vertical direction sensor 126 as a whole is an example lean angle sensor configured to measure the lean angle T. Hereinafter, the lean angle specifying module 112 and the vertical direction sensor 126 as a whole may be referred to as lean angle sensor 127.

In S220, the target lean angle determination module 114 (Fig. 12) uses the steering wheel angle Ai and the vehicle velocity V to determine the first target lean angle T1. The first target lean angle T1 represents a target value of the lean angle T. The correspondence relationship between the steering wheel angle Ai and vehicle velocity V and the first target lean angle T1 is predefined by the angle map data MT stored in the non-volatile memory 110n of the main control unit 110 (Fig. 10). The target lean angle determination module 114 references this angle map data MT to identify the first target lean angle T1 corresponding to the combination of steering wheel angle Ai and vehicle velocity V. In this embodiment, when the vehicle velocity V is fixed, the larger the absolute value of the steering wheel angle Ai is, the larger the absolute value of the first target lean angle T1 is. Accordingly, the larger the absolute value of the steering wheel angle Ai is, the smaller the turning radius R is, and therefore the vehicle 10 can turn in a turning radius R appropriate to the steering wheel angle Ai. In addition, when the steering wheel angle Ai is fixed, the higher the vehicle velocity V is, the smaller the absolute value of the first target lean angle T1 is. This suppresses a significant change in the lean angle T due to a change in the steering wheel angle Ai when the vehicle velocity V is higher, and therefore the driving stability of the vehicle 10 can be improved. It should be noted that a variety of other relationships may be employed as the relationship between the first target lean angle T1 and the vehicle velocity V. For example, the higher the vehicle velocity V is, the larger the absolute value of the first target lean angle T1 may be. In addition, the information used to determine the first target lean angle T1 may be any information including the steering wheel angle Ai instead of the combination of steering wheel angle Ai and vehicle velocity V.

In S230, the summing point 116 (Fig. 12) calculates a difference dT (sometimes referred to as lean angle difference dT) by subtracting the lean angle T from the first target lean angle T1.

In S232, the first determination module 212 (Fig. 12) determines a first flag FL1 that indicates whether or not the absolute value of the lean angle difference dT has increased. A variety of methods may be adopted in order to determine whether or not the absolute value of the lean angle difference dT has increased. In this embodiment, the process of Fig. 13 is repeatedly performed. The first determination module 212 compares a current lean angle difference dT (i.e. latest lean angle difference dT) with a lean angle difference dT at a predetermined time before the current time to determine whether or not the absolute value of the lean angle difference dT has increased. If the absolute value of the lean angle difference dT has increased, the first flag FL1 is set to zero. If the absolute value of the lean angle difference dT remains unchanged or has decreased, the first flag FL1 is set to one.

In S234, the first derivative calculation module 214 (Fig. 12) calculates an angular velocity Vt that is a derivative value of the lean angle T. The derivative value may be calculated by any well-known method. For example, a value obtained by subtracting a lean angle T at a predetermined time before the current time from a current lean angle T (i.e. latest lean angle T) may be used as the derivative value of the lean angle T, i.e. the angular velocity Vt. Similarly, derivative values of other parameters described later may also be calculated by a variety of methods.

In S236, the second determination module 216 (Fig. 12) determines a second flag FL2 that indicates whether or not the absolute value of the angular velocity Vt has increased. A variety of methods may be adopted in order to determine whether or not the absolute value of the angular velocity Vt has increased. In this embodiment, the second determination module 216 compares a current angular velocity Vt (i.e. latest angular velocity Vt) with an angular velocity Vt at a predetermined time before the current time to determine whether or not the absolute value of the angular velocity Vt has increased. If the absolute value of the angular velocity Vt has increased, the second flag FL2 is set to zero. If the absolute value of the angular velocity Vt remains unchanged or has decreased, the second flag FL2 is set to one.

In S238, the second derivative calculation module 218 (Fig. 12) calculates an angular acceleration At that is a derivative value of the angular velocity Vt. The derivative value may be calculated by any well-known method. For example, a value obtained by subtracting an angular velocity Vt at a predetermined time before the current time from a current angular velocity Vt (i.e. latest angular velocity Vt) may be used as the derivative value of the angular velocity Vt, i.e. the angular acceleration At.

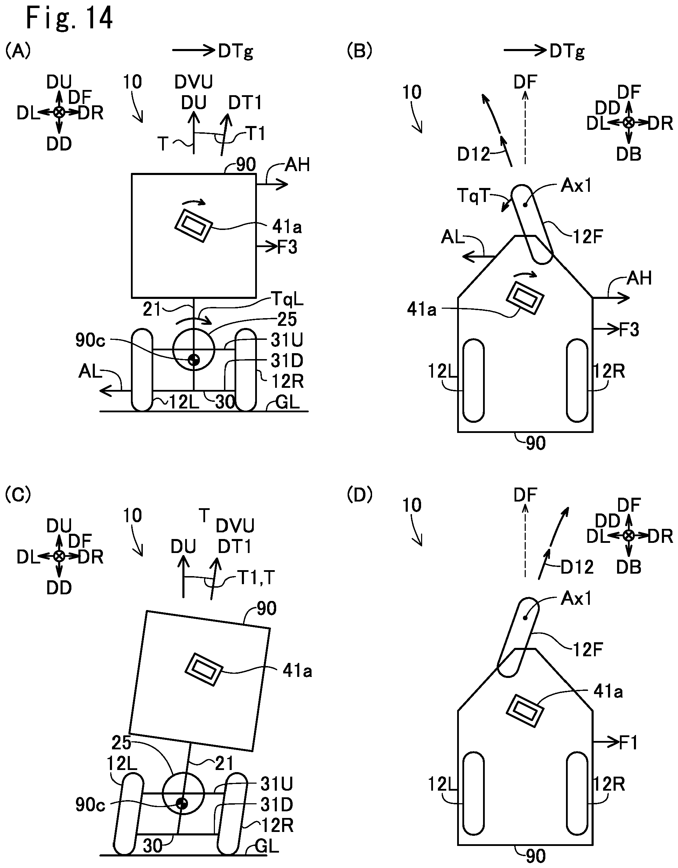

S240-S280 are performed by the steering motor control unit 500. S300-S340 are performed by the lean motor control unit 400. Fig. 14(A)-Fig. 14(D) are explanatory diagrams illustrating the turning torque of the steering motor 65 controlled by the steering motor control unit 500, and the lean torque of the lean motor 25 controlled by the lean motor control unit 400. Fig. 14(A), Fig. 14(C) show rear views of the vehicle 10, and Fig. 14(B), Fig. 14(D) show top views of the vehicle 10.

Fig. 14(A), Fig. 14(B) show when the steering wheel 41a is rotated to right with the upstanding vehicle 10 moving forward. In this situation, the vehicle upward direction DVU is approximately the same as the upward direction DU, and the lean angle T is approximately equal to zero. In addition, the first target lean angle T1 indicates a state where the vehicle body 90 leans to the right direction DR side because the steering wheel 41a is rotated to right. A target direction DTg shown in this figure indicates a rotational direction, either right or left, when the vehicle body 90 is caused to rotate in its width direction (i.e. the vehicle body 90 is caused to roll) so that the lean angle T approaches the first target lean angle T1. In the example of Fig. 14(A), Fig. 14(B), the target direction DTg is the right direction. A direction DT1 in Fig. 14(A) is defined by the first target lean angle T1, and is a target direction of the vehicle upward direction DVU The direction DT1 indicates the vehicle upward direction DVU when the lean angle T is the first target lean angle T1. As shown, the direction DT1 is tilted to the right direction DR side relative to the upward direction DU.

In this situation, the lean motor control unit 400 causes the lean motor 25 (Fig. 14(A)) to output a lean torque TqL that rotates the center longitudinal link member 21 in clockwise direction relative to the upper lateral link member 31U (described in detail later). This lean torque TqL leans the vehicle body 90 to the right direction DR side. The direction of the lean torque TqL (in this case, the right direction DR) is the same as the target direction DTg.

The steering motor control unit 500 causes the steering motor 65 to output a turning torque TqT (Fig. 14(B)) that turns the front fork 17 (and thus the front wheel 12F) toward the left direction DL. The direction of the turning torque TqT (in this case, the left direction DL) is opposite to the target direction DTg (and the turning torque may be referred to as counter torque TqT). In this manner, the steering motor control unit 500 causes the steering motor 65 to output the torque in the direction opposite to the target direction DTg (i.e. the roll direction of the vehicle body 90 for causing the lean angle T to approach the first target lean angle T1) when the lean angle T is different from the first target lean angle T1. Such a control of wheel may be referred to as counter-steering. In this embodiment, the counter-steering is employed to cause the lean angle T to approach the first target lean angle T1.

As shown in Fig. 14(B), the front wheel 12F turns to the left direction DL side due to the counter torque TqT. This causes the moving direction D12 of the front wheel 12F to turn to the left direction DL side, and the vehicle 10 turns toward the left direction DL side accordingly. As a result, the vehicle body 90 is subject to a centrifugal force F3. This centrifugal force F3 is in the right direction DR, i.e. the target direction DTg. Accordingly, the vehicle body 90 can use the centrifugal force F3 to rotate to the target direction DTg.

In addition, a portion on the downward direction DD side of the vehicle 10 which includes the front wheel 12F (in particular, a portion on the downward direction DD side of the gravity center 90c) moves toward the left direction DL side as indicated by the arrow AL in Fig. 14(A), Fig. 14(B) because the moving direction D12 of the front wheel 12F turns to the left direction DL side. Furthermore, the movement of the gravity center 90c is more difficult than that of a downward direction DD side portion of the vehicle 10. Accordingly, a portion on the upward direction DU side of the gravity center 90c of the vehicle 10 easily moves toward the right direction DR side as indicated by the arrow AH in Fig. 14(A), Fig. 14(B). In this manner, the vehicle body 90 can use the rotation about the gravity center 90c to rotate to the target direction DTg.

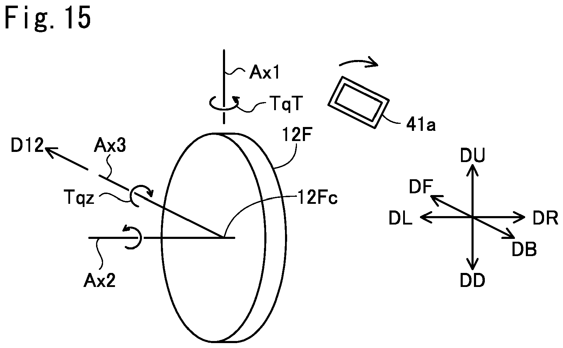

In addition, the vehicle body 90 can use precession movement of the front wheel 12F to rotate to the target direction DTg. Fig. 15 is a perspective view of the front wheel 12F similar to Fig. 9. The steering wheel 41a is also shown. When the steering wheel 41a is rotated to right, the left turning torque TqT is applied to the front wheel 12F. Due to such a counter torque TqT, the rotating front wheel 12F is subject to a torque Tqz about the front axis Ax3 to lean the front wheel 12F to the right direction DR side. The front wheel 12F being subject to such a torque Tqz leans the vehicle body 90 to the right direction, i.e. to the target direction DTg.

As described above, the counter torque TqT can use the centrifugal force F3 (Fig. 14(B)), the movement of the vehicle body 90 about the gravity center 90c (Fig. 14(A)), and the precession movement of the front wheel 12F (Fig. 15) to rotate the vehicle body 90 to the target direction DTg. This allows the lean angle T to easily approach the first target lean angle T1. In addition, the acceleration in the width direction perceived by the driver of the vehicle 10 is suppressed when the vehicle body 90 rotates to the direction of the centrifugal force F3. This improves the ride quality of the vehicle 10. The same applies to when the steering wheel 41a is rotated to left. The centrifugal force F3 is increased with an increase in the vehicle velocity V. The rotation of the vehicle body 90 about the gravity center 90c is increased with an increase in the vehicle velocity V. The angular momentum of the front wheel 12F is increased with an increase in the vehicle velocity V. Accordingly, the force caused by the counter torque TqT to rotate the vehicle body 90 to the target direction DTg is increased with an increase in the vehicle velocity V.

Fig. 14(C), Fig. 14(D) show that the lean angle T has become the first target lean angle T1 (the lean angle difference dT is approximately equal to zero) after Fig. 14(A), Fig. 14(B). In this situation, the lean torque TqL of the lean motor 25 is approximately equal to zero, and the turning torque TqT of the steering motor 65 is also approximately equal to zero. When the turning torque TqT is smaller, the front wheel 12F can turn to right and left independently of the direction of the steering wheel 41a. As described above, when the vehicle 10 moves at the lean angle T, the orientation of the front wheel 12F can settle at an orientation of the wheel angle AF determined based on the turning radius R expressed in Equation 6, and Equation 7. In the example of Fig. 14(D), the moving direction D12 of the front wheel 12F turns toward the right direction DR side in the same manner as the direction of the steering wheel 41a.

In this embodiment, when the magnitude of the lean angle difference dT is larger, the larger counter torque TqT facilitates the change in the lean angle T of the vehicle body 90. When the magnitude of the lean angle difference dT is smaller, the smaller turning torque allows the front wheel 12F to turn naturally. S240-S280 and S300-S340 of Fig. 13 will be described below.

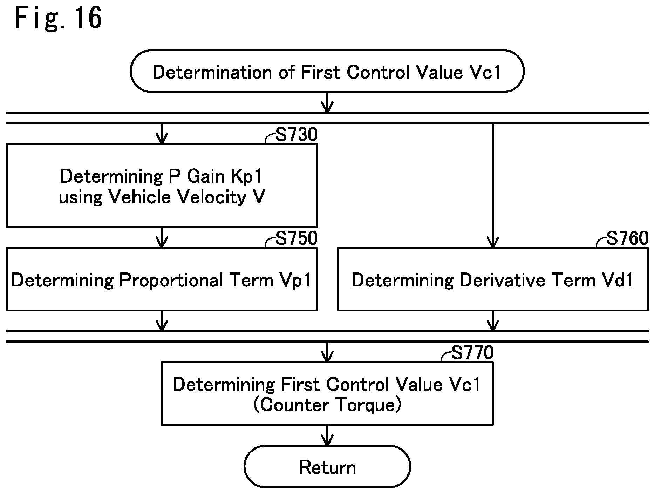

In S240, S250, S260, the steering motor control unit 500 determines control values Vc1, Vc2, Vc3 that are used to control the turning torque. Fig. 16, Fig. 17, Fig. 18 are flowcharts showing example processes of S240, S250, S260, respectively. They will be described below in order of S240, S250, S260.

In S240 (Fig. 13), the steering motor control unit 500 determines a first control value Vc1 according to a procedure of Fig. 16. The first control value Vc1 is a control value that is determined through a feedback control using the lean angle difference dT, and indicates the above-described counter torque.

In S730 (Fig. 16), the first P gain control module 512 (Fig. 12) uses the vehicle velocity V to determine a first P gain Kp1. The correspondence relationship between the vehicle velocity V and the first P gain Kp1 is predefined by the map data Mp1 stored in the non-volatile memory 500n of the steering motor control unit 500 (Fig. 10). The first P gain control module 512 references this map data Mp1 to identify the first P gain Kp1 corresponding to the vehicle velocity V.

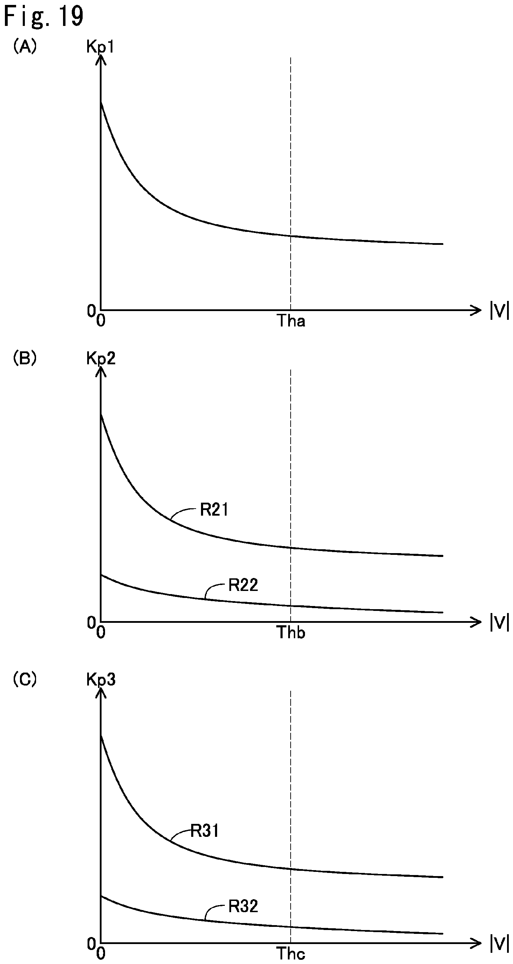

Fig. 19(A) is a graph showing an example correspondence relationship between the vehicle velocity V and the first P gain Kp1. The horizontal axis represents the absolute value of the vehicle velocity V (i.e. the magnitude of the vehicle velocity V), and the vertical axis represents the first P gain Kp1. As shown, the smaller the absolute value of the vehicle velocity V is, the larger the first P gain Kp1 is. The first P gain Kp1 changes smoothly as the vehicle velocity V changes. In this figure, a predetermined threshold value Tha larger than zero is shown (e.g. Tha=15km/h). When the absolute value of the vehicle velocity V is smaller than the threshold value Tha, the first P gain Kp1 is larger as compared to when the absolute value of the vehicle velocity V is larger than the threshold value Tha. The reason that the relationship between the vehicle velocity V and the first P gain Kp1 is configured as shown in Fig. 19(A) will be described later.

In S750 (Fig. 16), the first P control module 514 (Fig. 12) uses the lean angle difference dT, and the first P gain Kp1 determined in S730 to determine a first proportional term Vp1. The first proportional term Vp1 may be determined by a well-known method for determining a proportional term of PID control. For example, a value obtained by multiplying the lean angle difference dT by the first P gain Kp1 is output as the first proportional term Vp1.

In S760, the first D control module 516 uses the lean angle difference dT and a first D gain Kd1 to determine a first derivative term Vd1. In this embodiment, the first D gain Kd1 is predetermined. The first derivative term Vd1 may be determined by a well-known method for determining a derivative term of PID control. For example, a value obtained by multiplying a derivative value of the lean angle difference dT by the first D gain Kd1 is output as the first derivative term Vd1. The derivative value of the lean angle difference dT may be calculated by a variety of methods. For example, a value obtained by subtracting a lean angle difference dT at a point of time in the past by a particular time difference from current time from a current lean angle difference dT may be employed as derivative value. The time difference for determining the derivative value of the lean angle difference dT may be predetermined, or may be determined based on another parameter (e.g. the vehicle velocity V) instead. It should be noted that the first D gain Kd1 may be a variable value that varies depending on another parameter (e.g. the vehicle velocity V).

It should be noted that S730, S750 for determining the first proportional term Vp1, and S760 for determining the first derivative term Vd1 are performed in parallel.

In S770, the first summing point 518 (Fig. 12) acquires information representing terms Vp1, Vd1 from the processing modules 514, 516, respectively. Then, the first summing point 518 determines the first control value Vc1 that is a sum of these terms Vp1, Vd1. Then, the process of Fig. 16, i.e. S240 of of Fig. 13, ends.

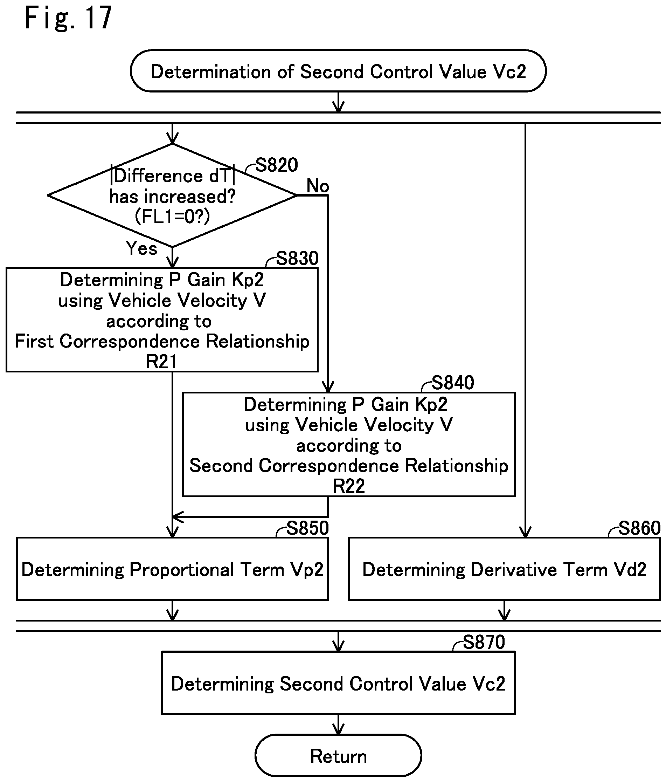

In S250 (Fig. 13), the steering motor control unit 500 determines a second control value Vc2 according to a procedure of Fig. 17. The second control value Vc2 is a control value that is determined through a feedback control using the angular velocity Vt, and indicates the turning torque that makes the angular velocity Vt smaller.

In S820 (Fig. 17), the second P gain control module 522 (Fig. 12) references the first flag FL1 (Fig. 13: S232) to determine whether or not the absolute value of the lean angle difference dT has increased. If the absolute value of the lean angle difference dT has increased (FL1=0, S820: Yes), then in S830 the second P gain control module 522 uses the vehicle velocity V to determine the second P gain Kp2 according to a first correspondence relationship R21. The first correspondence relationship R21 is one between the vehicle velocity V and the second P gain Kp2. The first correspondence relationship R21 is predefined by the map data Mp21 stored in the non-volatile memory 500n of the steering motor control unit 500 (Fig. 10). The second P gain control module 522 references this map data Mp21 to identify the second P gain Kp2 corresponding to the vehicle velocity V.

Fig. 19(B) is a graph showing example correspondence relationships between the vehicle velocity V and the second P gain Kp2. The horizontal axis represents the absolute value of the vehicle velocity V (i.e. the magnitude of the vehicle velocity V), and the vertical axis represents the second P gain Kp2. As shown by the first correspondence relationship R21 in this figure, the smaller the absolute value of the vehicle velocity V is, the larger the second P gain Kp2 is. The second P gain Kp2 changes smoothly as the vehicle velocity V changes. In this figure, a predetermined threshold value Thb larger than zero is shown (e.g. Thb=15km/h). When the absolute value of the vehicle velocity V is smaller than the threshold value Thb, the second P gain Kp2 is larger as compared to when the absolute value of the vehicle velocity V is larger than the threshold value Thb. The reason that the relationship between the vehicle velocity V and the second P gain Kp2 is configured as shown in Fig. 19(B) will be described later.

If the absolute value of the lean angle difference dT has not increased (FL1=1, S820: No), that is, the absolute value of the lean angle difference dT remains unchanged or has decreased, then in S840 the second P gain control module 522 uses the vehicle velocity V to determine the second P gain Kp2 according to a second correspondence relationship R22. The second correspondence relationship R22 is one between the vehicle velocity V and the second P gain Kp2. The second correspondence relationship R22 is predefined by the map data Mp22 stored in the non-volatile memory 500n of the steering motor control unit 500 (Fig. 10). The second P gain control module 522 references this map data Mp22 to identify the second P gain Kp2 corresponding to the vehicle velocity V.

On the graph of Fig. 19(B), the second correspondence relationship R22 is also plotted. As shown by the second correspondence relationship R22 in this figure, the smaller the absolute value of the vehicle velocity V is, the larger the second P gain Kp2 is. When the absolute value of the vehicle velocity V is smaller than the threshold value Thb, the second P gain Kp2 is larger as compared to when the absolute value of the vehicle velocity V is larger than the threshold value Thb. In addition, for any vehicle velocity V, the second P gain Kp2 in the second correspondence relationship R22 is smaller than the second P gain Kp2 in the first correspondence relationship R21.

In S850, the second P control module 524 (Fig. 12) uses the angular velocity Vt, and the second P gain Kp2 determined in S830 or S840 to determine a second proportional term Vp2. The second proportional term Vp2 may be determined by a well-known method for determining a proportional term of PID control. For example, a value obtained by multiplying the angular velocity Vt by the second P gain Kp2 is output as the second proportional term Vp2.

In S860, the second D control module 526 uses the angular velocity Vt and a second D gain Kd2 to determine a second derivative term Vd2. In this embodiment, the second D gain Kd2 is predetermined. The second derivative term Vd2 may be determined by a well-known method for determining a derivative term of PID control. For example, a value obtained by multiplying a derivative value of the angular velocity Vt by the second D gain Kd2 is output as the second derivative term Vd2. The time difference for determining the derivative value of the angular velocity Vt may be predetermined, or may be determined based on another parameter (e.g. the vehicle velocity V) instead. It should be noted that the second D gain Kd2 may be a variable value that varies depending on another parameter (e.g. the vehicle velocity V).

It should be noted that S820-S850 for determining the second proportional term Vp2 and S860 for determining the second derivative term Vd2 are performed in parallel.

In S870, the second summing point 528 (Fig. 12) acquires information representing terms Vp2, Vd2 from the processing modules 524, 526, respectively. Then, the second summing point 528 determines the second control value Vc2 that is a sum of these terms Vp2, Vd2. Then, the process of Fig. 17, i.e. S250 of Fig. 13, ends.

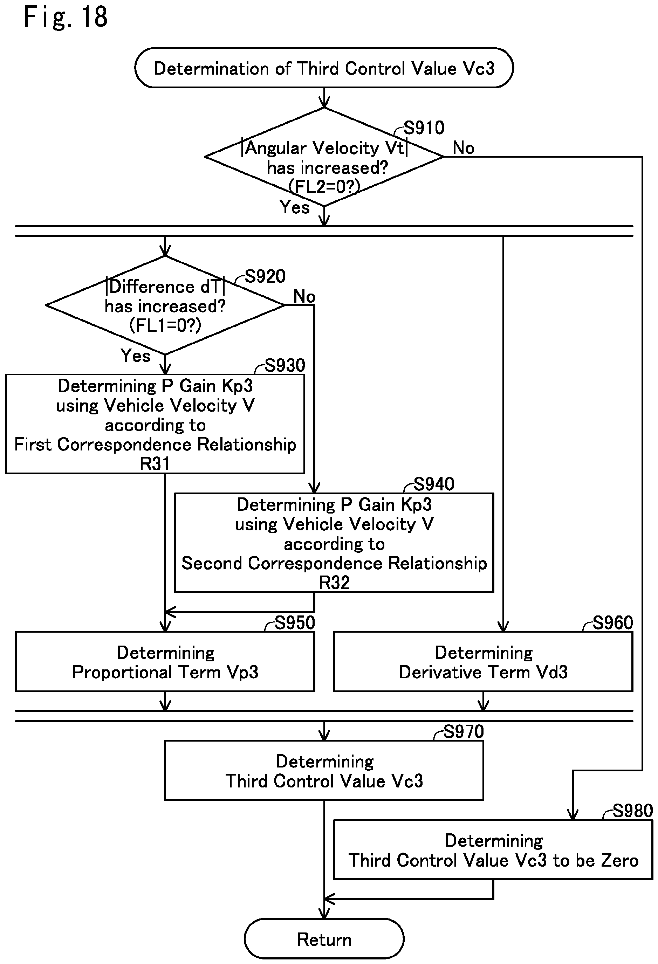

In S260 (Fig. 13), the steering motor control unit 500 determines a third control value Vc3 according to a procedure of Fig. 18. The third control value Vc3 is a control value that is determined through a feedback control using the angular acceleration At, and indicates the turning torque that makes the angular acceleration At smaller.

In S910 (Fig. 18), the third P gain control module 532 (Fig. 12) references the second flag FL2 (Fig. 13: S236) to determine whether or not the absolute value of the angular velocity Vt has increased. If the absolute value of the angular velocity Vt remains unchanged or has decreased (FL2=1, S910: No), then in S980 the third control value Vc3 is determined to be zero. In this embodiment, the third P gain control module 532 determines the third P gain Kp3 to be zero. Then, the third P control module 534 determines the third proportional term Vp3 to be zero based on the third P gain Kp3 of zero. In addition, if the second flag FL2 is equal to one (S910: No), then in S980 the third D control module 536 determines a third D gain Kd3 to be zero in S980, and determines a third derivative term Vd3 to be zero based on the third D gain Kd3 of zero. The third summing point 538 determines the third control value Vc3 to be zero by summing the third proportional term Vp3 of zero and the third derivative term Vd3 of zero. When S980 is completed, the process of Fig. 18, i.e. S260 of Fig. 13, ends.

If the absolute value of the angular velocity Vt has increased (FL2=0, S910: Yes), then in S920 the third P gain control module 532 (Fig. 12) references the first flag FL1 (Fig. 13: S232) to determine whether or not the absolute value of the lean angle difference dT has increased. If the absolute value of the lean angle difference dT has increased (FL1=0, S920: Yes), then in S930 the third P gain control module 532 uses the vehicle velocity V to determine the third P gain Kp3 according to a first correspondence relationship R31. The first correspondence relationship R31 is one between the vehicle velocity V and the third P gain Kp3. The first correspondence relationship R31 is predefined by the map data Mp31 stored in the non-volatile memory 500n of the steering motor control unit 500 (Fig. 10). The third P gain control module 532 references this map data Mp31 to identify the third P gain Kp3 corresponding to the vehicle velocity V.

Fig. 19(C) is a graph showing example correspondence relationships between the vehicle velocity V and the third P gain Kp3. The horizontal axis represents the absolute value of the vehicle velocity V (i.e. the magnitude of the vehicle velocity V), and the vertical axis represents the third P gain Kp3. As shown by the first correspondence relationship R31 in this figure, the smaller the absolute value of the vehicle velocity V is, the larger the third P gain Kp3 is. The third P gain Kp3 changes smoothly as the vehicle velocity V changes. In this figure, a predetermined threshold value Thc larger than zero is shown (e.g. Thc=15km/h). When the absolute value of the vehicle velocity V is smaller than the threshold value Thc, the third P gain Kp3 is larger as compared to when the absolute value of the vehicle velocity V is larger than the threshold value Thc. The reason that the relationship between the vehicle velocity V and the third P gain Kp3 is configured as shown in Fig. 19(C) will be described later.

If the absolute value of the lean angle difference dT has not increased (FL1=1, S920: No), that is, the absolute value of the lean angle difference dT remains unchanged or has decreased, then in S940 the third P gain control module 532 uses the vehicle velocity V to determine the third P gain Kp3 according to a second correspondence relationship R32. The second correspondence relationship R32is one between the vehicle velocity V and the third P gain Kp3. The second correspondence relationship R32 is predefined by the map data Mp32 stored in the non-volatile memory 500n of the steering motor control unit 500 (Fig. 10). The third P gain control module 532 references this map data Mp32 to identify the third P gain Kp3 corresponding to the vehicle velocity V.

On the graph of Fig. 19(CL), the second correspondence relationship R32 is also plotted. As shown by the second correspondence relationship R32 in this figure, the smaller the absolute value of the vehicle velocity V is, the larger the third P gain Kp3 is. When the absolute value of the vehicle velocity V is smaller than the threshold value Thc, the third P gain Kp3 is larger as compared to when the absolute value of the vehicle velocity V is larger than the threshold value Thc. In addition, for any vehicle velocity V, the third P gain Kp3 in the second correspondence relationship R32 is smaller than the third P gain Kp3 in the first correspondence relationship R31.

In S950, the third P control module 534 (Fig. 12) uses the angular acceleration At, and the third P gain Kp3 determined in S930 or S940 to determine a third proportional term Vp3. The third proportional term Vp3 may be determined by a well-known method for determining a proportional term of PID control. For example, a value obtained by multiplying the angular acceleration At by the third P gain Kp3 is output as the third proportional term Vp3.

In S960, the third D control module 536 uses the angular acceleration At and the third D gain Kd3 to determine the third derivative term Vd3. In this embodiment, the third D gain Kd3 is predetermined. The third derivative term Vd3 may be determined by a well-known method for determining a derivative term of PID control. For example, a value obtained by multiplying a derivative value of the angular acceleration At by the third D gain Kd3 is output as the third derivative term Vd3. The time difference for determining the derivative value of the angular acceleration At may be predetermined, or may be determined based on another parameter (e.g. the vehicle velocity V) instead. It should be noted that the third D gain Kd3 may be a variable value that varies depending on another parameter (e.g. the vehicle velocity V).

It should be noted that S920-S950 for determining the third proportional term Vp3 and S960 for determining the third derivative term Vd3 are performed in parallel.

In S970, the third summing point 538 (Fig. 12) acquires information representing terms Vp3, Vd3 from the processing modules 534, 536, respectively. Then, the third summing point 538 determines the third control value Vc3 that is a sum of these terms Vp3, Vd3. Then, the process of Fig. 18, i.e. S260 of of Fig. 13, ends.

It should be noted that S240, S250, S260 of Fig. 13 are performed in parallel.

In S270 (Fig. 13), the fourth summing point 590 (Fig. 12) acquires information representing the control values Vc1, Vc2, Vc3 from the summing points 518, 528, 538, respectively. Then, the fourth summing point 590 calculates a turning actuation control value Vca which is a sum of these control values Vc1, Vc2, Vc3, and then outputs information indicative of the turning actuation control value Vca to the electric power control module 500c. In S280, the electric power control module 500c controls the electric power to be supplied to the steering motor 65 according to the control value Vca.

The turning actuation control value Vca indicates a target value of turning torque of the steering motor 65. Hereinafter, the torque indicated by the turning actuation control value Vca may be referred to as target turning torque TqTt. The turning actuation control value Vca indicates, for example, magnitude and direction of electric current to be supplied to the steering motor 65. The magnitude of electric power (i.e. the magnitude of torque of the steering motor 65) is increased with an increase in the absolute value of the control value Vca. In S270, the steering motor control unit 500 (more specifically, the fourth summing point 590) may be considered to determine the target turning torque TqTt of the steering motor 65. In S280, the steering motor control unit 500 (more specifically, the electric power control module 500c) may be considered to control the torque of the steering motor 65 to become the target turning torque TqTt.

Each control value Vc1, Vc2, Vc3, and thus each term Vp1, Vd1, Vp2, Vd2, Vp3, Vd3 constitutes a part of the turning actuation control value Vca. Therefore, each control value Vc1, Vc2, Vc3, and thus each term Vp1, Vd1, Vp2, Vd2, Vp3, Vd3 may be also considered to be a kind of control value that represents the turning torque of the steering motor 65.

The first control value Vc1 is determined through a feedback control using the lean angle difference dT. The direction of the turning torque indicated by the first control value Vc1 is opposite to the target direction DTg as described with reference to Fig. 14(B) (i.e. it is a counter torque). The first control value Vc1 represents the turning torque for causing the lean angle T to approach the first target lean angle T1.

The second control value Vc2 and the third control value Vc3 represent the turning torque for suppressing unintended change in the lean angle T due to a disturbance (e.g. irregularities of road) or overshoot. When the lean angle T changes rapidly due to a disturbance etc., the respective magnitudes of the second control value Vc2 and third control value Vc3 become larger. With the vehicle 10 traveling stably, the angular velocity Vt and the angular acceleration At are smaller, and therefore the respective magnitudes of the second control value Vc2 and third control value Vc3 are also smaller.

The user usually operates the steering wheel 41a moderately. In this case, the magnitudes of the angular velocity Vt and angular acceleration At of the lean angle T do not increase as significantly as that of the lean angle difference dT does. Accordingly, the magnitude of the first control value Vc1 determined by the feedback control of the lean angle difference dT is larger than those of the control values Vc2, Vc3 determined by the feedback control of the angular velocity Vt and angular acceleration At of the lean angle T. That is, the major component of the target turning torque TqTt of the steering motor 65 can be represented by the first control value Vc1. In addition, the first P gain Kp1 and the first D gain Kd1 are determined so that the magnitude of the first proportional term Vp1 is larger than that of the first derivative term Vd1 when the user operates the steering wheel 41a moderately. That is, the major component of the target turning torque TqTt of the steering motor 65 can be represented by the first proportional term Vp1. The turning torque is controlled according to such a target turning torque TqTt, and therefore it is possible to readily cause the lean angle T to approach the first target lean angle T1 as described with reference to Fig. 14(A), Fig. 14(B).

The first control value Vc1 is determined using the lean angle difference dT. Therefore, the first control value Vc1 is determined to be a value appropriate for the lean angle difference dT. Accordingly, the driving stability of the vehicle 10 can be improved.

In addition, the magnitude of the first control value Vc1 (in this case, that of the first proportional term Vp1), i.e. that of the target turning torque TqTt may be increased with an increase in the magnitude of the lean angle difference dT. As in Fig. 14(A), Fig. 14(B), when the magnitude of the lean angle difference dT is larger, the magnitude of the turning torque TqT (i.e. larger counter torque TqT) is larger according to the larger target turning torque TqTt. The larger turning torque TqT (i.e. larger counter torque TqT) can turn the front wheel 12F in a direction opposite to the target direction DTg. This allows the vehicle body 90 to easily rotate to the target direction DTg. Thus, the lean angle T can easily approach the first target lean angle T1.

When the lean angle T approaches the first target lean angle T1, and thus the magnitude of the lean angle difference dT decreases as in Fig. 14(C), Fig. 14(D), the magnitude of the first proportional term Vp1 decreases. Accordingly, the magnitude of the target turning torque TqTt decreases. As a result, the moving direction D12 of the wheel 12F can become a direction appropriate for the lean angle T (i.e. first target lean angle T1).

In this embodiment, the first P gain Kp1 and the first D gain Kd1 are determined so that the first P gain Kp1 is approximately equal to an angle difference-torque ratio, which is a ratio of the magnitude of the turning torque represented by the first control value Vc1 to the magnitude of the lean angle difference dT (e.g. the first D gain Kd1 is sufficiently small). And, the first P gain Kp1 changes according to the vehicle velocity V, as shown in Fig. 19(A). That is, the first control value Vc1 is determined so that the angle difference-torque ratio changes according to the vehicle velocity V. In this manner, the first control value Vc1 appropriate for the vehicle velocity V is determined, which allows for improved driving stability at a variety of vehicle velocities V.

In addition, as shown in Fig. 19(A), the first P gain Kp1 when the magnitude of the vehicle velocity V is smaller than the threshold value Tha is larger than the first P gain Kp1 when the magnitude of the vehicle velocity V is larger than the threshold value Tha. That is, the first control value Vc1 is determined so that the angle difference-torque ratio when the magnitude of the vehicle velocity V is smaller than the threshold value Tha is larger than the angle difference-torque ratio when the magnitude of the vehicle velocity V is larger than the threshold value Tha. As described above, the force caused by the counter torque TqT to rotate the vehicle body 90 to the target direction DTg as described with reference to Fig. 14(A), Fig. 14(B), Fig. 15 is decreased with a decrease in the vehicle velocity V. Accordingly, by increasing the first P gain Kp1 in the case of the magnitude of the vehicle velocity V being smaller, the vehicle body 90 can be rotated toward the target direction DTg properly even if the magnitude of the vehicle velocity V is smaller. Accordingly, it is possible to suppress delay of change in the lean angle T of the vehicle body 90.

The second control value Vc2 is determined through a feedback control using the angular velocity Vt of the lean angle T. The direction of the turning torque indicated by the second control value Vc2 is the same as the direction of change in the lean angle T. For example, when the vehicle upward direction DVU of the vehicle body 90 turns to the left direction due to a disturbance etc., the lean angle T changes toward the left direction. In this case, the direction of the turning torque indicated by the second control value Vc2 is the left direction. This turning torque causes the front wheel 12F to turn to the left direction. The front wheel 12F turns to the left direction, and thereby the vehicle 10 turns to the left direction. Accordingly, a rightward centrifugal force acts on the vehicle body 90. As a result, the vehicle upward direction DVU of the vehicle body 90 is suppressed from turning to the left direction side unintentionally.

In this embodiment, the second P gain Kp2 and the second D gain Kd2 are determined so that the second P gain Kp2 is approximately equal to an angular velocity-torque ratio, which is a ratio of the magnitude of the turning torque represented by the second control value Vc2 to the magnitude of the angular velocity Vt (e.g. the second D gain Kd2 is sufficiently small). And, the second P gain Kp2 changes according to the vehicle velocity V, as shown in Fig. 19(B). That is, the second control value Vc2 is determined so that the angular velocity-torque ratio changes according to the vehicle velocity V. In this manner, the second control value Vc2 appropriate for the vehicle velocity V is determined, which allows for improved driving stability at a variety of vehicle velocities V.

In addition, as shown in Fig. 19(B), the second P gain Kp2 when the magnitude of the vehicle velocity V is smaller than the threshold value Thb is larger than the second P gain Kp2 when the magnitude of the vehicle velocity V is larger than the threshold value Thb. That is, the second control value Vc2 is determined so that the angular velocity-torque ratio when the magnitude of the vehicle velocity V is smaller than the threshold value Thb is larger than the angular velocity-torque ratio when the magnitude of the vehicle velocity V is larger than the threshold value Thb. As described above, the force caused by the counter torque TqT to rotate the vehicle body 90 to the target direction DTg as described with reference to Fig. 14(A), Fig. 14(B), Fig. 15 is decreased with a decrease in the vehicle velocity V. Therefore, the lean angle T readily changes unintentionally due to a disturbance etc. when the magnitude of the vehicle velocity V is smaller. In this embodiment, the second P gain Kp2 (and thus the angular velocity-torque ratio) becomes larger in the case of the magnitude of the vehicle velocity V being smaller, and therefore it is possible to suppress unintended change in the lean angle T due to a disturbance etc. when the magnitude of the vehicle velocity V is smaller.

In addition, as described with reference to S820-S840 of Fig. 17, Fig. 19(B), under the condition that the vehicle velocity V is constant, when the absolute value of the lean angle difference dT has increased (S820: Yes, R21), the second P gain Kp2 is larger as compared to when the absolute value of the lean angle difference dT has not increased (S820: No, R22). When the absolute value of the lean angle difference dT has increased, the larger second P gain Kp2 (and thus the larger second control value Vc2) can suppress an increase in the absolute value of dT. On the other hand, when the absolute value of the lean angle difference dT has decreased, the smaller second P gain Kp2 (and thus the smaller second control value Vc2) can promote a decrease in the absolute value of dT.

The third control value Vc3 is determined through a feedback control using the angular acceleration At of the lean angle T. The direction of the turning torque indicated by the third control value Vc3 is the same as the direction of change in the angular velocity Vt of the lean angle T. When the vehicle upward direction DVU of the vehicle body 90 begins to turn to the left direction due to a disturbance etc., the lean angle T begins to change toward the left direction. Accordingly, the angular velocity Vt increases toward the left direction (that is, the angular velocity Vt changes toward the left direction). In this case, the direction of the turning torque indicated by the third control value Vc3 is the left direction. This turning torque causes the front wheel 12F to turn to the left direction. The front wheel 12F turns to the left direction, and thereby the vehicle 10 turns to the left direction. Accordingly, a rightward centrifugal force acts on the vehicle body 90. As a result, the vehicle upward direction DVU of the vehicle body 90 is suppressed from turning to the left direction side unintentionally. It should be note that in a state of the vehicle upward direction DVU of the vehicle body 90 turning to the left direction, the direction of change of the angular velocity Vt is the right direction when the magnitude of the angular velocity Vt has decreased.

In this embodiment, the third P gain Kp3 and the third D gain Kd3 are determined so that the third P gain Kp3 is approximately equal to an angular acceleration-torque ratio, which is a ratio of the magnitude of the turning torque represented by the third control value Vc3 to the magnitude of the angular acceleration At (e.g. the third D gain Kd3 is sufficiently small). And, the third P gain Kp3 changes according to the vehicle velocity V, as shown in Fig. 19(C). That is, the third control value Vc3 is determined so that the angular acceleration-torque ratio changes according to the vehicle velocity V. In this manner, the third control value Vc3 appropriate for the vehicle velocity V is determined, which allows for improved driving stability at a variety of vehicle velocities V.

In addition, as shown in Fig. 19(C), the third P gain Kp3 when the magnitude of the vehicle velocity V is smaller than the threshold value The is larger than the third P gain Kp3 when the magnitude of the vehicle velocity V is larger than the threshold value Thc. That is, the third control value Vc3 is determined so that the angular acceleration-torque ratio when the magnitude of the vehicle velocity V is smaller than the threshold value The is larger than the angular acceleration-torque ratio when the magnitude of the vehicle velocity V is larger than the threshold value Thc. As described above, the force caused by the counter torque TqT to rotate the vehicle body 90 to the target direction DTg as described with reference to Fig. 14(A), Fig. 14(B), Fig. 15 is decreased with a decrease in the vehicle velocity V. Therefore, the lean angle T readily changes unintentionally due to a disturbance etc. when the magnitude of the vehicle velocity V is smaller. In this embodiment, the third P gain Kp3 (and thus the angular acceleration-torque ratio) becomes larger in the case of the magnitude of the vehicle velocity V being smaller, and therefore it is possible to suppress unintended change in the lean angle T due to a disturbance etc. when the magnitude of the vehicle velocity V is smaller.

In addition, as described with reference to S920, S980 of Fig. 18, if the absolute value of the angular velocity Vt has decreased (S910: No), the third control value Vc3 is determined to be zero. Accordingly, the absolute value of the angular velocity Vt is suppressed from being increased due to the third control value Vc3.

In addition, as described with reference to S920-S940 of Fig. 18, Fig. 19(C), under the condition that the vehicle velocity V is constant, when the absolute value of the lean angle difference dT has increased (S920: Yes, R31), the third P gain Kp3 is larger as compared to when the absolute value of the lean angle difference dT has not increased (S920: No, R32). When the absolute value of the lean angle difference dT has increased, the larger third P gain Kp3 (and thus the larger third control value Vc3) can suppress an increase in the absolute value of dT. On the other hand, when the absolute value of the lean angle difference dT has decreased, the smaller third P gain Kp3 (and thus the smaller third control value Vc3) can promote a decrease in the absolute value of dT.

Furthermore, the vehicle 10 includes the lean motor 25 (Fig. 4) configured to apply a lean torque to the vehicle body 90. Therefore, the vehicle 10 can use the lean torque to change the lean angle T properly.

In S310 (Fig. 13), the P control module 414 (Fig. 12) uses the lean angle difference dT and the P gain Kpb to determine a proportional term Vpb. In this embodiment, the P gain Kpb is predetermined. The proportional term Vpb may be determined by a well-known method for determining a proportional term of PID control. For example, a value obtained by multiplying the lean angle difference dT by the P gain Kpb is output as the proportional term Vpb. It should be noted that the P gain Kpb may be a variable value that varies depending on another parameter (e.g. the vehicle velocity V).

In S320, the D control module 416 uses the lean angle difference dT and the D gain Kdb to determine a derivative term Vdb. In this embodiment, the D gain Kdb is predetermined. The derivative term Vdb may be determined by a well-known method for determining a derivative term of PID control. For example, a value obtained by multiplying a derivative value of the lean angle difference dT by the D gain Kdb is output as the derivative term Vdb. The time difference for determining the derivative value of the lean angle difference dT may be predetermined, or may be determined based on another parameter (e.g. the vehicle velocity V) instead. It should be noted that the D gain Kdb may be a variable value that varies depending on another parameter (e.g. the vehicle velocity V).

It should be noted that S310 for determining the proportional term Vpb and S320 for determining the derivative term Vdb are performed in parallel.

In S330, the summing point 490 (Fig. 12) acquires information representing the terms Vpb, Vdb from the processing modules 414, 416, respectively. Then, the second summing point 490 calculates a lean actuation control value Vcb which is a sum of these terms Vpb, Vdb, and then outputs information representing the lean actuation control value Vcb to the electric power control module 400c. In S340, the electric power control module 400c controls the electric power to be supplied to the lean motor 25 according to the control value Vcb.

The lean actuation control value Vcb indicates a target value of lean torque of the lean motor 25. Hereinafter, the torque indicated by the lean actuation control value Vcb may be referred to as target lean torque. The direction of the lean torque indicated by the lean actuation control value Vcb is the same as the target direction DTg, i.e. the rotational direction of the vehicle body 90 for causing the lean angle T to approach the first target lean angle T1, as described with reference to Fig. 14(A). The lean actuation control value Vcb indicates, for example, magnitude and direction of electric current to be supplied to the lean motor 25. The magnitude of electric power (i.e. the magnitude of torque of the lean motor 25) is increased with an increase in the absolute value of the control value Vcb. In S330, the lean motor control unit 400 (more specifically, the summing point 490) may be considered to determine the target lean torque of the lean motor 25. In S340, the lean motor control unit 400 (more specifically, the electric power control module 400c) may be considered to control the torque of the lean motor 25 to become the target lean torque. In addition, each term Vpb, Vdb constitutes a part of the lean actuation control value Vcb. Therefore, each term Vpb, Vdb may be also considered to be a kind of control value that indicates the lean torque of the lean motor 25.

It should be noted that S240-S280 for controlling the steering motor 65 and S310-S340 for controlling the lean motor 25 are performed in parallel. Then, the process of Fig. 13, i.e. S130 of Fig. 11, ends.

It should be noted that the lock motor 925 (Fig. 4) may be controlled by the controller 100 (Fig. 1). For example, the controller 100 may change the state of the lock device 900 by actuating the lock motor 925 in response to the user's instruction. However, the lock motor 925 and the lock motor control unit 600 may be omitted.

B. Second Embodiment:

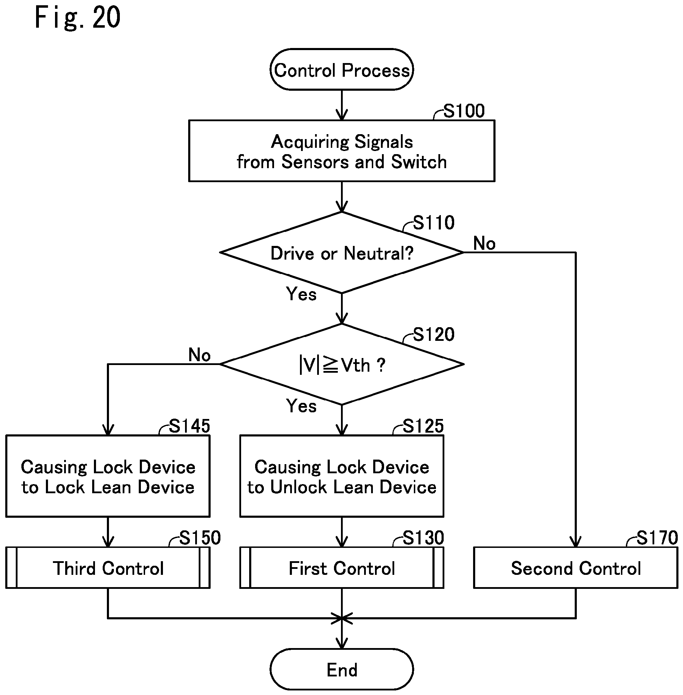

Fig. 20 is a flowchart showing another embodiment of control process. This differs from the embodiment of Fig. 11 only in that S 120, S125 are added between S110 and S130, and in that S145, S150 that branches from S120 are added. In Fig. 20, the same steps as in Fig. 11 are labeled by the same reference numbers, and are not specifically described here. In addition, the hardware configurations of the vehicle in this embodiment are the same as those of the vehicle 10 in the first embodiment.

If the determination result in S110 is "Yes," then in S120, the main control unit 110 (Fig. 10) determines whether or not the magnitude of the vehicle velocity V is equal to or larger than the threshold value Vth. As described with reference to Fig. 14(A), Fig. 14(B), the force caused by the counter torque TqT to rotate the vehicle body 90 to the target direction DTg (i.e. the force that changes the lean angle T) is decreased with a decrease in the vehicle velocity V. If the vehicle velocity V is smaller, then the counter torque TqT may not change the lean angle T properly. The threshold value Vth represents a lower limit of the vehicle velocity V with which the counter torque TqT can change the lean angle T properly. Such a threshold value Vth varies depending on the configuration of the vehicle 10, and is determined experimentally in advance. The threshold value Vth is 5 km/h, for example.

If the magnitude of the vehicle velocity V is equal to or larger than the threshold value Vth (S120: Yes), then in S125, the main control unit 110 causes the lock device 900 to unlock the lean device 89. In this embodiment, the main control unit 110 causes the lock motor control unit 600 to drive the lock motor 925 so that the state of the lock device 900 becomes the unlock state. If the state of the lock device 900 is already the unlock state, then the main control unit 110 maintains the unlock state of the lock device 900 without driving the lock motor 925.

The process of S130 is the same as that of S130 in Fig. 11. It should be noted that S125 and S130 may be performed in parallel.

If the magnitude of the vehicle velocity V is smaller than the threshold value Vth (S120: No), then in S145, the main control unit 110 causes the lock device 900 to lock the lean device 89. In this embodiment, the main control unit 110 causes the lock motor control unit 600 to drive the lock motor 925 so that the state of the lock device 900 becomes the lock state. If the state of the lock device 900 is already the lock state, then the main control unit 110 maintains the lock state of the lock device 900 without driving the lock motor 925. As such, the control angle Tc and thus the lean angle T are fixed.

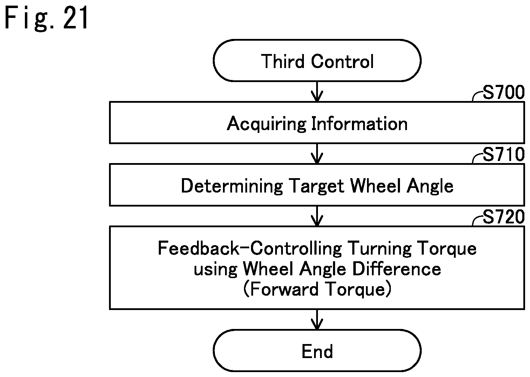

In S150, the controller 100 performs a third control for controlling the steering motor 65 so that the vehicle 10 moves in the direction mapped to the steering wheel angle. Fig. 21 is a flowchart showing an example process of the third control. S700 is similar to S200 in Fig. 13. The main control unit 110 acquires information indicative of the vehicle velocity V, the steering wheel angle Ai, the wheel angle AF, and the vertically downward direction DD from the sensors 122, 123, 124, and 126, respectively.

In S710, the main control unit 110 uses the steering wheel angle Ai and the vehicle velocity V to determine a target wheel angle. The target wheel angle is determined in the same manner as the target wheel angle in S170 of Fig. 11 (i.e. the first target wheel angle AFt1). The main control unit 110 references the map data MAF to identify the target wheel angle corresponding to the combination of steering wheel angle and vehicle velocity V.

In S720, the main control unit 110 supplies the steering motor control unit 500 with an instruction for controlling the steering motor 65 so that the wheel angle AF becomes equal to the target wheel angle. According to the instruction, the steering motor control unit 500 drives the steering motor 65 so that the wheel angle AF becomes equal to the target wheel angle. The steering motor control unit 500 performs a feedback control of the steering motor 65 which uses a difference between the wheel angle AF and the target wheel angle (e.g. a so-called PID (Proportional Integral Derivative) control). In S720, the steering motor control unit 500 causes the steering motor 65 to output a torque (sometimes referred to as forward torque) that turns the front fork 17 (and thus the front wheel 12F) toward the target direction DTg, instead of the counter torque (Fig. 14(B)).

In this manner, if the magnitude of the vehicle velocity V is smaller than the threshold value Vth, then the lock device 900 locks the lean device 89. As such, the control angle Tc (and thus the lean angle T) are fixed. Accordingly, the lean angle T is suppressed from becoming unstable. In addition, if the magnitude of the vehicle velocity V is smaller than the threshold value Vth, then the turning torque of the steering motor 65 turns the front wheel 12F toward the target direction DTg so that the wheel angle AF becomes equal to the target wheel angle. Accordingly, the vehicle 10 can move toward the direction indicated by the steering wheel angle Ai.

Then, the controller completes the process of Fig. 21, i.e. S150 of Fig. 20. It should be noted that S145 and S150 may be performed in parallel.

In response to any of S130, S150, S170 being performed, the process of Fig. 20 ends. The controller 100 repeatedly performs the process of Fig. 20. If the condition for performing S125, S130 is met (S110: Yes, S120: Yes), the controller 100 proceeds to S125, S130. If the condition for performing S145, S150 is met (S110: Yes, S120: No), the controller 100 proceeds to S145, S150. If the condition for performing S170 is met (S110: No), the controller 100 proceeds to S170. It should be noted that in S170, the main control unit 110 may cause the lock motor control unit 600 to drive the lock motor 925 so that the state of the lock device 900 becomes the lock state.

If the moving vehicle 10 decelerates, and then the vehicle velocity V changes from a value larger than or equal to the threshold value Vth to a value smaller than the threshold value Vth, then the state of the lock device 900 switches from the unlock state to the lock state. In a phase where the vehicle velocity V is equal to or larger than the threshold value Vth, the vehicle 10 can use the counter torque to travel stably in the direction indicated by the steering wheel angle Ai, as described with reference to Fig. 14(A)-Fig. 14(D) etc. If the vehicle velocity V becomes smaller than the threshold value Vth, then the lean device 89 is locked by the lock device 900. Accordingly, the lean angle T of the vehicle 10 is suppressed from becoming unstable. In addition, the steering motor 65 turns the front wheel 12F so that the wheel angle AF becomes equal to the target wheel angle. Accordingly, the vehicle 10 can move stably toward the direction indicated by the steering wheel angle Ai.

It should be noted that the control angle Tc when the lean device 89 is locked is the same as the control angle Tc immediately before locking the lean device 89. The vehicle 10 is usually decelerated with the magnitude of the steering wheel angle Ai smaller. Therefore, the step of locking the lean device 89 due to a deceleration of the vehicle 10 (Fig. 20: S145) is usually performed with the magnitude of the lean angle T smaller. Accordingly, the vehicle 10 can run properly after the state of the lean device 89 is switched from the unlocked state to the locked state in S145. In addition, when the magnitude of the locked lean angle T is larger than a predetermined threshold angle, the controller 100 may control the lean motor 25 so that the magnitude of the lean angle T becomes equal to or smaller than the threshold angle. The threshold angle may be any of various values of zero or larger (e.g. 5 degree).

If the vehicle 10 accelerates, and then the vehicle velocity V changes from a value smaller than the threshold value Vth to a value larger than or equal to the threshold value Vth, then the state of the lock device 900 switches from the lock state to the unlock state. In a phase where the vehicle velocity V is smaller than the threshold value Vth, the lean device 89 is locked by the lock device 900, and therefore the lean angle T of the vehicle 10 is suppressed from becoming unstable. In addition, the steering motor 65 turns the front wheel 12F so that the wheel angle AF becomes equal to the target wheel angle. Accordingly, the vehicle 10 can move stably toward the direction indicated by the steering wheel angle Ai. If the vehicle velocity V becomes equal to or larger than the threshold value Vth, then the lean device 89 is unlocked. Then, the vehicle 10 can use the counter torque to travel stably in the direction indicated by the steering wheel angle Ai, as described with reference to Fig. 14(A)-Fig. 14(D) etc.

The vehicle 10 is usually accelerated with the magnitude of the steering wheel angle Ai smaller. Therefore, when the lean device 89 is unlocked due to an acceleration of the vehicle 10 (Fig. 20: S125), the control angle Tc (and thus the lean angle T) is suppressed from changing rapidly.

B. Modifications:

(1) As the process of controlling the turning torque, a variety of other processes may be employed instead of the processes described above with reference to Fig. 12, Fig. 13, Fig. 16-Fig. 18, Fig. 19(A)-Fig. 19(C). For example, in the graph of Fig. 19(A), the first P gain Kp1 may change in a stepwise manner as the magnitude of the vehicle velocity V changes. Alternatively, the first P gain Kp1 may be maintained at a constant value as the vehicle velocity V changes. The first P gain Kp1 may change depending on another parameter different from the vehicle velocity V. Alternatively, the first P gain Kp1 may be a fixed value rather than a variable value. In this case, the first P gain control module 512 (Fig. 12), and S730 (Fig. 16) may be omitted. As the process of determining the first control value Vc1, a variety of feedback control processes may be employed that use the lean angle difference dT. For example, the D control (Fig. 16: S760) may be omitted. However, the D control can be used to improve the stability of the turning torque.

In addition, in the graph of Fig. 19(B), the second P gain Kp2 may change in a stepwise manner as the magnitude of the vehicle velocity V changes. Alternatively, the second P gain Kp2 may be maintained at a constant value as the vehicle velocity V changes. The second P gain Kp2 may change depending on another parameter different from the vehicle velocity V. Alternatively, the second P gain Kp2 may be a fixed value rather than a variable value. In this case, the second P gain control module 522 (Fig. 12), and S820, S830, S840 (Fig. 17) may be omitted. As the process of determining the second control value Vc2, a variety of feedback control processes may be employed that use the angular velocity Vt. For example, the D control (Fig. 17: S860) may be omitted. However, the D control can be used to improve the stability of the turning torque. In addition, the second control value Vc2 may be omitted.

In addition, in the graph of Fig. 19(C), the third P gain Kp3 may change in a stepwise manner as the magnitude of the vehicle velocity V changes. Alternatively, the third P gain Kp3 may be maintained at a constant value as the vehicle velocity V changes. The third P gain Kp3 may change depending on another parameter different from the vehicle velocity V. Alternatively, the third P gain Kp3 may be a fixed value rather than a variable value. In this case, the third P gain control module 532 (Fig. 12), and S920, S930, S940 (Fig. 18) may be omitted. As the process of determining the third control value Vc3, a variety of feedback control processes may be employed that use the angular acceleration At. For example, the D control (Fig. 18: S960) may be omitted. However, the D control can be used to improve the stability of the turning torque. In addition, the third control value Vc3 may be omitted.

In Fig. 17, the control that uses the first flag FL1 (e.g. S820, S840) may be omitted. In this case, the second P gain Kp2 may be determined in S830, irrespective of the lean angle difference dT. In Fig. 18, the control that uses the first flag FL1 (e.g. S920, S940) may be omitted in a similar manner. Furthermore, in Fig. 18, the control that uses the second flag FL2 (e.g. S910, S980) may be omitted.

In general, the controller 100 may use one or more control values, including a control value indicative of a counter torque (e.g. the first proportional term Vp1), to determine the turning actuation control value Vca (and thus the target turning torque). Where the controller 100 may calculate a sum of the one or more control values as the turning actuation control value Vca.

(2) The controller 100 may be configured in a variety of ways to perform processes for controlling the device outputting the turning torque (e.g. the steering motor 65) and the device outputting the lean torque (e.g. the lean motor 25). For example, the controller 100 may be configured by using a single computer. At least part of the controller 100 may be configured with dedicated hardware such as ASIC (Application Specific Integrated Circuit). For example, the lean motor control unit 400 and the steering motor control unit 500 in Fig. 12 may be configured with an ASIC. The controller 100 may be a variety of electric circuits, for example, an electric circuit with or without a computer. In addition, input values and output values mapped by the map data MT, MAF, Mp1, Mp21, Mp22, Mp31, Mp32 may be mapped by any other element. For example, an element such as mathematical function, analog circuit, etc. may map the input values to the output values.

Alternatively, as the lean angle used for control of each of the turning torque and the lean torque, a variety of angles that indicates a degree of lean of the vehicle body 90 in its width direction may be employed instead of the lean angle T (Fig. 5(B)) with reference to the vertically upward direction DU. For example, the control angle Tc may be used as the lean angle. In this case, it is preferable to provide the vehicle 10 with a sensor configured to measure the control angle Tc. This sensor is an example lean angle sensor.

(3) The front wheel 12F (Fig. 2) is an example turn wheel that can turn to right and left relative to the forward movement direction DF of the vehicle 10. The front wheel support device 41 is an example turn wheel support unit that supports the turn wheel. The turn wheel support unit may be configured in a variety of other ways instead of the configuration of the front wheel support device 41. For example, the supporting member which rotatably supports the turn wheel may be a cantilevered member instead of the front fork 17. In addition, the turning device that supports the supporting member turnably to right and left relative to the vehicle body 90 may be a variety of other devices instead of the bearing 68. For example, the turning device may be a link mechanism coupling the supporting member to the vehicle body.

In general, the turn wheel support unit may include K (K is an integer equal to or larger than 1) supporting members. And, each supporting member may support one or more turn wheels. The turn wheel support unit may include K turning devices. The K turning devices may support turnably the K supporting members, respectively. The turn wheel support unit may include K turning actuators. The K turning actuators and the K supporting members have one-to-one correspondence. And, each turning actuator may be configured to apply the turning torque to the corresponding single supporting member. Alternatively, the turn wheel support unit may include a single turning actuator. The single turning actuator may be configured to apply the turning torque to each of the K supporting members.

In either case, the turn wheel support unit is preferably configured to allow one or more turn wheel to turn to right and left relative to the vehicle body following a change in lean of the vehicle body independently of operation amount input to the operation input unit (e.g. the steering wheel 41a). For example, a turning device secured to the vehicle body preferably supports turnably the supporting member. In this case, the supporting member also leans along with the vehicle body when the vehicle body leans. Accordingly, as described above with regard to Fig. 9 etc., the direction of the turn wheel (i.e. the wheel angle AF (Fig. 2)) can change following a lean of the vehicle body.

(4) The operation input unit may be a variety of other devices configured to be handled to input operation amount indicative of a turning direction and a degree of turn, instead of the device rotatable to right and left such as the steering wheel 41a (Fig. 1). For example, the operation input unit may be a lever that can be tilted to right and to left relative to a predetermined reference direction (e.g. upright direction).

(5) The lean device may be configured in any other way to lean the vehicle body 90 in its width direction instead of the configuration of the lean device 89 in Fig. 4. For example, the link mechanism 30 may be substituted with a pedestal. The motor 51L, 51R are secured to the pedestal. And, the pedestal and the first support portion 82 are coupled rotatably with each other via a bearing. The lean motor 25 can rotate the first support portion 82 to each of the right direction DR side and the left direction DL side relative to the pedestal. This enables the vehicle body 90 to lean to each of the right direction DR side and the left direction DL side.

In general, the lean device may include a "first member which is connected directly or indirectly to at least one of a pair of wheels spaced apart from each other in the width direction of the vehicle," a "second member connected directly or indirectly to the vehicle body," and an actuator. The actuator applies to the first member and the second member a force that changes the relative position between the first member and the second member (e.g., a torque that changes the orientation of the second member relative to the first member). The lean device may further include a "connection device for movably connecting the first member to the second member." The connection device may be a hydraulic cylinder that slidably connects the first member to the second member. Alternatively, the connection device may be a bearing that rotatably connects the first member to the second member. The bearing may be a ball bearing, or may be a sliding bearing instead. The actuator may be an electric motor such as the lean motor 25. Alternatively, the actuator may be a pump if the lean device includes the hydraulic cylinder.

(6) The connection which is connected to the operation input unit and to the supporting member of the turn wheel support unit may be configured in a variety of other ways instead of the configuration of the connection 50 of Fig. 1. The third portion 53 of the connection 50 may be an elastic body (e.g. coil spring, torsion spring, rubber, etc.) which can be elastically deformed instead of the viscous damper. The third portion 53 may be any of a variety of devices which is connected to the first portion 51 and the second portion 52, transmits a torque from the first portion 51 to the second portion 52, and includes a movable part that allows for a change in relative position between the first portion 51 and the second portion 52. Such a third portion 53 allows the second portion 52 to move while the first portion 51 does not move, that is, allows the wheel angle AF to change while the steering wheel angle Ai does not change. As a result, the wheel angle AF of the front wheel 12F can change readily following a lean of the vehicle body 90. In general, preferably, the connection is connected mechanically to the operation input unit and to the supporting member, and transmits a torque from the operation input unit to the supporting member in response to a mechanical motion of the operation input unit due to handling of the operation input unit. And, the connection may allow the direction of the one or more turn wheels to change following a change in lean of the vehicle body independently of operation amount input to the operation input unit. It should be noted that such a connection may be omitted.

(7) A variety of configurations may be employed as the total number and arrangement of the plurality of wheels. For example, there may be one front wheel in total and one rear wheel in total. There may be two front wheels in total and one rear wheel in total. There may be two front wheels in total and two rear wheels in total. A pair of wheels spaced apart from each other in the width direction may be front wheels, and may also be turn wheels. The rear wheels may be turn wheels. The drive wheel may be the front wheel.

In general, the vehicle includes N (N is an integer equal to or larger than 2) wheels including at least one front wheel and at least one rear wheel. And, the N wheels include at least one turn wheel turnable to right and left. If the total number of wheels N is equal to 2, the lean device such as the lean device 89 is omitted. The vehicle may include N wheels, including a pair of wheels spaced apart from each other in the width direction of the vehicle, and at least one other wheel. In this case, the total number of wheels N is equal to or larger than 3. The pair of wheels may be front wheels, or may be rear wheels instead. In this case, at least one of the pair of wheels or the other wheel(s) are preferably configured as one or more turn wheels turnable to right and left relative to the forward movement direction of the vehicle. That is, only the pair of wheels may be turn wheels, only the other wheel(s) may be turn wheel(s), or the three or more wheels including the pair of wheels and the other wheel(s) may be tun wheels. In this case, the total number of the other wheel(s) included in the one or more turn wheels may be any number. The controls in Fig. 20, Fig. 21 may be applied to a variety of vehicles that include three or more wheels, and a lean device. In any event, the actuator (e.g. lean motor 25) of the lean device may be omitted.

(8) The lean actuator may be any device configured to apply the lean torque to the vehicle body. For example, the lean actuator may include a weight connected to the vehicle body so that it can slide relative to the vehicle body in its width direction, and an electric motor for controlling the position of the weight relative to the vehicle body. When the weight moves to the right side of the vehicle body, the vehicle body can lean to right direction side, and when the weight moves to the left side of the vehicle body, the vehicle body can lean to left direction side. However, such a lean actuator may be omitted.

(9) The lock device may be any device configured to lock the lean device instead of the lock device 900 in Fig. 4. For example, the lock device includes a rod configured to be inserted into a through-hole of the center longitudinal link member 21 and into a through-hole of the upper lateral link member 31U for a particular control angle Tc (e.g. Tc=0). The rod being inserted into the respective through-holes of the members 21, 31U prevents any relative movement between the members 21, 31U. The lock device may be provided together with the lean device in the vehicle. In general, the lock device may include a moving device configured to move at least one of a "first lock member which is connected directly or indirectly to at least one of a pair of wheels spaced apart from each other in the width direction of the vehicle" or a "second lock member connected directly or indirectly to the vehicle body." The moving device may prevent a relative movement between the first and second lock members, i.e. between the pair of wheels and the vehicle body, by moving at least one of the first or second lock member into contact with each other. In the lock device 900 of Fig. 4, the brake pad 930 is an example of first lock member, the brake rotor 910 is an example of second lock member, and the brake caliper 920 is an example of moving device. The first lock member may be a member of a device other than the lock device (e.g. the above-mentioned first member of the lean device). In a similar manner, the second lock member may be a member of a device other than the lock device (e.g. the above-mentioned second member of the lean device). It should be noted that the lock device may be omitted.

(10) The method of controlling the vehicle may be a variety of other methods instead of the method described above with reference to Fig. 11 etc. For example, in S170, the second target lean angle T2 having an absolute value smaller than that of the first target lean angle T1 may be used instead of the first target lean angle T1.

(11) The controller 100 (e.g. the main control unit 110) may determine the first target lean angle T1 using the steering wheel angle Ai without using the vehicle velocity V. In general, the controller 100 may determine the target lean angle using one or more parameters including the steering wheel angle Ai (more generally, the operation amount input to the operation input unit). Without limiting to the vehicle velocity V, it is possible to employ a variety of other parameters as parameter other than the operation amount.

The controller 100 uses a yaw rate of the vehicle 10 in addition to the steering wheel angle Ai to determine the first target lean angle T1. The yaw rate of the vehicle 10, which is change rate of yaw angle, is angular velocity of rotation about an axis that passes through the gravity center of the vehicle 10 and is parallel to the vertically upward direction DU. The current yaw rate can be determined using information from the gyroscope sensor 126g. The vehicle 10 can be subject to external factors such as wind. The traveling direction of the vehicle 10 can be affected by such a force. For example, assume that the steering wheel angle Ai is equal to zero, and the vehicle 10 is moving straight ahead on a horizontal road. If the wind blows from right to left, the vehicle body 90 is subject to a force in the left direction DL. As a result, the vehicle body 90 can lean to the left direction DL side, and thus the vehicle 10 can turn to the left direction DL. In order to suppress such an unintended turn, the controller 100 (e.g. the main control unit 110) may use the steering wheel angle Ai and the current yaw rate to determine the target lean angle. The controller 100 uses the steering wheel angle Ai to identify a target yaw rate. The correspondence relationship between the steering wheel angle Ai and the target yaw rate is predetermined. For example, the target yaw rate of zero is mapped to the steering wheel angle Ai of zero. The target yaw rate indicative of right turn is mapped to the steering wheel angle Ai indicative of right turn. The controller 100 references this correspondence relationship to identify the target yaw rate corresponding to the steering wheel angle Ai. Then, the main control unit 110 uses a difference between the target yaw rate and the current yaw rate to determine the target lean angle. For example, the controller 100 calculates the target lean angle by adding to the current lean angle T a correction value corresponding to the yaw rate difference between the target yaw rate and the current yaw rate. The correspondence relationship between the yaw rate difference and the correction value may be determined experimentally in advance. For example, if the current yaw rate is equal to the target yaw rate (yaw rate difference = 0), the correction value is equal to zero. In this case, the first target lean angle T1 is equal to the current lean angle T. If the target yaw rate is equal to zero (i.e. Straight movement), and the current yaw rate indicates left turn, the correction value corrects the first target lean angle T1 to an angle rotated to the right direction DR side relative to the current lean angle T. For example, if the vehicle 10 turns to left unintentionally due to right-to-left wind in spite of the steering wheel angle Ai equal to zero, the first target lean angle T1 is determined to be an angle that indicates that the vehicle body 90 leans to the right direction DR side. This enables the vehicle 10 to resist the wind to move straight ahead. In this manner, deviation of the vehicle 10 from its intended traveling direction due to external factors is suppressed.

(12) The control unit 126c of the vertical direction sensor 126 may use other information related to the movement of the vehicle 10 in addition to the information from the gyroscope sensor 126g and the acceleration sensor 126a to detect the vertically downward direction DD. As the other information, for example, the location of the vehicle 10 determined by using GPS (Global Positioning System) may be used. The control unit 126c may correct the vertically downward direction DD according to change in location determined by GPS. An amount of correction based on change in location determined by GPS may be determined experimentally in advance. It should be noted that the control unit 126c may be a variety of electric circuits, for example, an electric circuit with a computer or an electric circuit (e.g. ASIC) without a computer. The gyroscope sensor 126g may be a sensor that detects an angular velocity instead of angular acceleration.

(13) The vehicle may be configured in a variety of other ways instead of the respective configuration of the above embodiments and modifications. For example, in the embodiment in Fig. 4, the motors 51L, 51R may be connected via suspensions to the link mechanism 30. The drive device for driving the drive wheels may be any device which rotates the wheels (e.g. internal combustion engine) instead of the electric motor. The maximum riding capacity of the vehicle may be two or more persons instead of one person. The correspondence relationship used to control the vehicle (e.g. the correspondence relationship represented by the map data MT, MAF, Mp1, Mp2) may be determined experimentally to allow the vehicle 10 to drive properly. The controller of the vehicle may dynamically change the correspondence relationship used to control the vehicle, according to the condition of the vehicle. For example, the vehicle may include a weight sensor for measuring the weight of the vehicle body, and the controller may adjust the correspondence relationship according to the weight of the vehicle body.

In each embodiment described above, some of the components which are achieved by hardware may be substituted with software while some or all of the components which are achieved by software may be substituted with hardware. For example, the function of the controller 100 in Fig. 12 may be achieved by a dedicated hardware circuitry.

In addition, if some or all of the functions of the present invention are achieved by a computer program, the program can be provided in the form of a computer-readable storage medium (e.g. non-transitory storage medium) having the program stored therein. The program can be used while being stored in a storage medium (computer-readable storage medium) which is the same as or different from the provided storage medium. The "computer-readable storage medium" is not limited to a portable storage medium such as memory card or CD-ROM, but may also include an internal storage within the computer such as various types of ROM, and an external storage connected to the computer such as hard disk drive.

The present invention has been described above with reference to the embodiments and the modifications although the above-described embodiments are intended to facilitate the understanding of the invention, but not to limit the invention. The present invention may be modified or improved without departing from the spirit of the invention, and includes its equivalents.

Industrial Applicability

The present invention can be preferably used for a vehicle.

Description of the References

| | |
|---|---|
| 10 | vehicle |
| 11 | seat |
| 12F | front wheel |
| 12L | left rear wheel |
| 12R | right rear wheel |
| 12Fc | gravity center |
| 12La | wheel |
| 12Lb | tire |
| 12Ra | wheel |
| 12Rb | tire |
| 17 | front fork |
| 20 | main body |
| 20a | front portion |
| 20b | bottom portion |
| 20c | rear portion |
| 20d | support portion |
| 21 | center longitudinal link member |
| 25 | lean motor |
| 30 | link mechanism |
| 31D | lower lateral link member |
| 31U | upper lateral link member |
| 33L | left longitudinal link member |
| 33R | right longitudinal link member |
| 38 | bearing |
| 39 | bearing |
| 41 | front wheel support device |
| 41a | steering wheel |
| 41ax | supporting rod |
| 45 | accelerator pedal |
| 46 | brake pedal |
| 47 | shift switch |
| 50 | connection |
| 51 | first portion |
| 52 | second portion |
| 53 | third portion |
| 51L | left electric motor |
| 51R | right electric motor |
| 65 | steering motor |
| 68 | bearing |
| 70 | suspension system |
| 70L | left suspension |
| 70R | right suspension |
| 71L, 71R | coil spring |

| 72L, 72R | shock absorber |
|---|---|
| 75 | connector rod |
| 80 | rear wheel support |
| 82 | first support portion |
| 83 | second support portion |
| 89 | lean device |
| 90 | vehicle body |
| 90c | gravity center |
| 100 | controller |
| 110 | main control unit |
| 110g, 300g, 400g, 500g | program |
| 110n, 300n, 400n, 500n | non-volatile memory |
| 110p, 300p, 400p, 500p | processor |
| 110v, 300v, 400v, 500v | volatile memory |
| 120 | battery |
| 122 | vehicle velocity sensor |
| 123 | steering wheel angle sensor |
| 124 | wheel angle sensor |
| 126 | vertical direction sensor |
| 126a | acceleration sensor |
| 126c | control unit |
| 126g | gyroscope sensor |
| 127 | lean angle sensor |
| 145 | accelerator pedal sensor |
| 146 | brake pedal sensor |
| 300 | drive device control unit |
| 300c | electric power control module |
| 400 | lean motor control unit |
| 400c | electric power control module |
| 500 | steering motor control unit |
| 500c | electric power control module |
| 600 | lock motor control unit |
| 900 | lock device |
| 910 | brake rotor |
| 920 | brake caliper |
| 930 | brake pad |
| 925 | lock motor |

**Claims**

1. A vehicle comprising:

   a vehicle body;
   N (N is an integer equal to or larger than 2) wheels including one or more turn wheels turnable to right and left relative to a forward movement direction of the vehicle, the N wheels including at least one front wheel and at least one rear wheel;
   a lean angle sensor configured to measure a lean angle in a width direction of the vehicle body;
   an operation input unit configured to be handled to input an operation amount indicative of a turning direction and a degree of turn;
   a turn wheel support unit that supports the one or more turn wheels, and
   a controller,
   wherein the turn wheel support unit comprises:

      a supporting member that rotatably supports the one or more turn wheels;
      a turning device that supports the supporting member turnably to right and left relative to the vehicle body; and
      a turning actuator configured to apply to the supporting member a turning torque for turning the supporting member, and

wherein a lean angle targeted by the vehicle body is referred to as a target lean angle;

a difference between the target lean angle and the lean angle of the vehicle body is referred to as a lean angle difference; and

a target torque of the turning actuator is referred to as a target turning torque,

wherein the controller is configured to:

determine the target lean angle by using one or more parameters including the operation amount;

determine a first type control value indicative of a first torque by using the lean angle difference , the first torque causing the supporting member to turn in a direction opposite to a target direction that is a rotational direction to rotate the vehicle body in its width direction so that the lean angle approaches the target lean angle, the target direction being either a right direction or a left direction;

determine the target turning torque by using one or more control values including the first type control value; and

control the turning actuator according to the target turning torque.

2.  The vehicle of claim 1,

wherein a ratio of a magnitude of the first torque indicated by the first type control value to a magnitude of the lean angle difference is referred to as an angle difference-torque ratio, and

wherein the controller is configured to determine the first type control value so that the angle difference-torque ratio changes according to a vehicle velocity.

3.  The vehicle of claim 2,

wherein the controller is configured to determine the first type control value so that the angle difference-torque ratio when a magnitude of the vehicle velocity is smaller than a first threshold value is larger than the angle difference-torque ratio when the magnitude of the vehicle velocity is larger than the first threshold value.

4.  The vehicle of any one of claims 1 to 3,

wherein the controller is configured to:

determine a second type control value indicative of a second torque by using an angular velocity of the lean angle of the vehicle body, the second torque causing the supporting member to turn in a direction of change in the lean angle out of the right direction and the left direction; and

determine the target turning torque by using two or more control values including the first type control value and the second type control value.

5.  The vehicle of claim 4,

wherein a ratio of a magnitude of the second torque indicated by the second type control value to a magnitude of the angular velocity of the lean angle is referred to as an angular velocity-torque ratio, and

wherein the controller is configured to determine the second type control value so that the angular velocity-torque ratio changes according to the vehicle velocity.

6.  The vehicle of claim 5,

wherein the controller is configured to determine the second type control value so that the angular velocity-torque ratio when a magnitude of the vehicle velocity is smaller than a second threshold value is larger than the angular velocity-torque ratio when a magnitude of the vehicle velocity is larger than the second threshold value.

7.  The vehicle of any one of claims 1 to 6,

wherein the controller is configured to:

determine a third type control value indicative of a third torque by using an angular acceleration of the lean angle of the vehicle body, the third torque causing the supporting member to turn in a direction of change in angular velocity of the lean angle out of the right direction and the left direction; and

determine the target turning torque by using two or more control values including the first type control value and the third type control value.

8.  The vehicle of claim 7,

wherein a ratio of a magnitude of the third torque indicated by the third type control value to a magnitude of the angular acceleration of the lean angle is referred to as an angular acceleration-torque ratio, and

wherein the controller is configured to determine the third type control value so that the angular acceleration-torque ratio changes according to a vehicle velocity.

9.  The vehicle of claim 8,
    wherein the controller is configured to determine the third type control value so that the angular acceleration-torque ratio when a magnitude of the vehicle velocity is smaller than a third threshold value is larger than the angular acceleration-torque ratio when a magnitude of the vehicle velocity is larger than the third threshold value.

10. The vehicle of any one of claims 1 to 9, comprising:
    a lean actuator configured to apply to the vehicle body a lean torque for controlling the lean angle of the vehicle body.

11. The vehicle of any one of claims 1 to 10,
    wherein the N wheels include three or more wheels including a pair of wheels spaced apart from each other in the width direction;
    wherein the vehicle comprises:

    a lean device configured to lean the vehicle body in the width direction; and
    a lock device configured to lock the lean device, and

    wherein the controller is configured to:

    if a magnitude of the vehicle velocity is equal to or larger than a fourth threshold value,

    cause the lock device to unlock the lean device, and
    control the turning actuator according to the target turning torque, and

    if a magnitude of the vehicle velocity is smaller than the fourth threshold value,

    cause the lock device to lock the lean device, and
    cause the turning actuator to output the turning torque that causes the supporting member to turn in the target direction.

Fig. 1

Fig. 2

# Fig. 3

Fig. 4

Fig.5

(A)

(B)

Fig. 6

Fig. 7

Fig. 8

Fig. 9

# Fig. 10

| VEHICLE VELOCITY SENSOR [122] | MAIN CONTROL UNIT [110] | DRIVE DEVICE CONTROL UNIT [300] | RIGHT ELECTRIC MOTOR [51R] |

STEERING WHEEL ANGLE SENSOR [123]

WHEEL ANGLE SENSOR [124]

300p
300v
300n
300g
300c

LEFT ELECTRIC MOTOR [51L]

VERTICAL DIRECTION SENSOR [126]
126c
126a | 126g

LEAN MOTOR CONTROL UNIT [400]

LEAN MOTOR [25]

400p
400v
400n
400g
400c

ACCELERATOR PEDAL SENSOR [145]

110p
110v
110n
110g
MT
MAF

BRAKE PEDAL SENSOR [146]

STEERING MOTOR CONTROL UNIT [500]

STEERING MOTOR [65]

SHIFT SWITCH [47]

LOCK DEVICE [900]
925

LOCK MOTOR CONTROL UNIT [600]

500p
500v
500n
500g
Mp1
Mp21
Mp22
Mp31
Mp32
500c

10

Fig. 11

```
              ( Control Process )
                      │
                      ▼              S100
          ┌──────────────────────────┐
          │     Acquiring Signals     │
          │   from Sensors and Switch │
          └──────────────────────────┘
                      │
                      ▼          S110
                 ╱─────────╲
                ╱  Drive or  ╲         No
               ╱   Neutral?   ╲──────────────────┐
                ╲            ╱                    │
                 ╲─────────╱                      │
                   │ Yes                          │
                   ▼        S130                  ▼        S170
          ┌──────────────────┐          ┌──────────────────┐
          ║   First Control   ║          │   Second Control  │
          └──────────────────┘          └──────────────────┘
                   │                              │
                   ▼◄─────────────────────────────┘
              ( End )
```

Fig. 12

EP 3 828 068 A1

MAIN CONTROL UNIT ~110

216 ~ FL2 → 532,536

SECOND DETERMINATION MODULE
FL2=0 (|VT| has increased)
FL2=1 (|VT| has decreased)

Vt

214 ~ 218 ~
FIRST DERIVATIVE CALCULATION MODULE
SECOND DERIVATIVE CALCULATION MODULE
At

T
Vt

212 ~ FL1 → 522,526,532,536

FIRST DETERMINATION MODULE
FL1=0 (|DT| has increased)
FL1=1 (|DT| has decreased)

dT

112
LEAN ANGLE SPECIFYING MODULE

VERTICAL DIRECTION SENSOR
DD
DD

126 ~ 127 →

STEERING WHEEL ANGLE SENSOR
Ai

123 ~

116
−T
T

Ai

VEHICLE VELOCITY SENSOR
V

122 ~

V
TARGET LEAN ANGLE DETERMINATION MODULE
+ T1

~114

→512,522,532

10 →

~100
~500

V FL1→ FL2→ P GAIN CONTROL MODULE ~532
Kp3

At P CONTROL MODULE (Kp3) Vp3 ~534 538

At FL1→ FL2→ D CONTROL MODULE (Kd3) Vd3 ~536 + Vc3

V → FL1→ P GAIN CONTROL MODULE ~522
Kp2

Vt P CONTROL MODULE (Kp2) Vp2 ~524 528

Vt FL1→ D CONTROL MODULE (Kd2) Vd2 ~526 + Vc2

V → P GAIN CONTROL MODULE ~512
Kp1

dT P CONTROL MODULE (Kp1) Vp1 ~514 518

dT D CONTROL MODULE (Kd1) Vd1 ~516 + Vc1

590 ~500c

ELECTRIC POWER CONTROL MODULE

+ Vca

65
STEERING MOTOR

dT P CONTROL MODULE (KpB) Vpb +
~414
490

dT D CONTROL MODULE (KdB) Vdb +
~416 ~421

ELECTRIC POWER CONTROL MODULE
~400c

25
LEAN MOTOR

400 ~

Fig. 13

First Control → Acquiring Information → Specifying Lean Angle T → Determining Target Lean Angle T1 → Calculating Difference dT

S238 — Calculating Angular Acceleration At

S200 — S236 — Determining Second Flag FL2
FL2=0 (|Vt| has increased)
FL2=1 (|Vt| has decreased)

S210 — S220 — Calculating Angular Velocity Vt

S234 — S230 — S232 — Determining First Flag FL1
FL1=0 (|dT| has increased)
FL1=1 (|dT| has decreased)

S240 — Determining First Control Value Vc1 (Counter Torque)

S260 — Determining Third Control Value Vc3

S250 — Determining Second Control Value Vc2

S310 — Determining Proportional Term Vpb

S320 — Determining Derivative Term Vdb

S270 — Determining and Outputting Control Value Vca (Target Turning Torque TqTt)

S330 — Determining and Outputting Control Value Vcb (Target Lean Torque)

S280 — Controlling Electric Power of Steering Motor

S340 — Controlling Electric Power of Lean Motor

Return

EP 3 828 068 A1

# Fig. 14

(A)

(B)

(C)

(D)

Fig. 15

# Fig. 16

```
            ( Determination of First Control Value Vc1 )
                              │
                              ▼
═══════════════════════════════════════════════════════
              ▼        S730                    │
    ┌─────────────────────────┐                │
    │ Determining P Gain Kp1  │                │
    │ using Vehicle Velocity V│                │
    └─────────────────────────┘                │
              ▼        S750                     ▼        S760
 ┌──────────────────────────┐  ┌────────────────────────────────┐
 │Determining Proportional  │  │ Determining Derivative Term Vd1│
 │      Term Vp1            │  │                                │
 └──────────────────────────┘  └────────────────────────────────┘
              │                              │
══════════════▼══════════════════════════════▼═════════════
                     ▼        S770
        ┌────────────────────────────────┐
        │ Determining First Control Value Vc1 │
        │        (Counter Torque)        │
        └────────────────────────────────┘
                     ▼
              (      Return      )
```

# Fig. 17

```
┌─────────────────────────────────────────────┐
│  Determination of Second Control Value Vc2   │
└─────────────────────────────────────────────┘
```

S820

|Difference dT|
has increased?
(FL1=0?)

No

Yes

S830

Determining P Gain Kp2
using Vehicle Velocity V
according to
First Correspondence Relationship
R21

S840

Determining P Gain Kp2
using Vehicle Velocity V
according to
Second Correspondence Relationship
R22

S850

Determining Proportional Term Vp2

S860

Determining Derivative Term Vd2

S870

Determining Second Control Value Vc2

```
┌──────────┐
│  Return  │
└──────────┘
```

# Fig. 18

$$\boxed{\text{Determination of Third Control Value Vc3}}$$

S910

|Angular Velocity Vt| has increased? (FL2=0?) — No

Yes

S920

|Difference dT| has increased? (FL1=0?) — No

Yes

S930
Determining P Gain Kp3 using Vehicle Velocity V according to First Correspondence Relationship R31

S940
Determining P Gain Kp3 using Vehicle Velocity V according to Second Correspondence Relationship R32

S950
Determining Proportional Term Vp3

S960
Determining Derivative Term Vd3

S970
Determining Third Control Value Vc3

S980
Determining Third Control Value Vc3 to be Zero

$$\boxed{\text{Return}}$$

Fig. 19

(A)

(B)

(C)

Fig. 20

```
                    ┌─────────────────────┐
                    │   Control Process   │
                    └──────────┬──────────┘
                               │                   S100
                    ┌──────────▼──────────┐
                    │  Acquiring Signals  │
                    │ from Sensors and Switch│
                    └──────────┬──────────┘
                               │              S110
                          ◇────▼────◇              No
                          Drive or Neutral? ──────────────┐
                          ◇─────────◇                     │
                               │ Yes                      │
                               │              S120        │
                  No      ◇────▼────◇                      │
              ┌──────────── |V|≧Vth ? ◇                   │
              │          ◇─────────◇                      │
              │               │ Yes                       │
              │    S145       │           S125            │        S170
      ┌───────▼───────┐   ┌───▼───────────┐               │
      │ Causing Lock  │   │ Causing Lock  │               │
      │ Device to Lock│   │ Device to Unlock│             │
      │  Lean Device  │   │  Lean Device  │               │
      └───────┬───────┘   └───┬───────────┘               │
              │   S150        │     S130                  │
      ┌───────▼───────┐   ┌───▼───────────┐       ┌───────▼───────┐
      │ Third Control │   │ First Control │       │ Second Control│
      └───────┬───────┘   └───┬───────────┘       └───────┬───────┘
              │               │                           │
              └───────────────┼───────────────────────────┘
                         ┌────▼────┐
                         │   End   │
                         └─────────┘
```

Fig. 21

```
        ┌─────────────────────────┐
        │      Third Control      │
        └────────────┬────────────┘
                     │          ⌐S700
   ┌─────────────────▼─────────────────┐
   │       Acquiring Information        │
   └─────────────────┬─────────────────┘
                     │          ⌐S710
   ┌─────────────────▼─────────────────┐
   │    Determining Target Wheel Angle  │
   └─────────────────┬─────────────────┘
                     │          ⌐S720
   ┌─────────────────▼─────────────────┐
   │  Feedback-Controlling Turning Torque │
   │    using Wheel Angle Difference      │
   │         (Forward Torque)            │
   └─────────────────┬─────────────────┘
                     │
        ┌────────────▼────────────┐
        │           End           │
        └─────────────────────────┘
```

## INTERNATIONAL SEARCH REPORT

| International application No. |
| --- |
| PCT/JP2019/029256 |

### A. CLASSIFICATION OF SUBJECT MATTER

Int.Cl.  B62K5/10(2013.01)i, B60G17/015(2006.01)i, B60G21/05(2006.01)i, B62J99/00(2009.01)i, B62K5/027(2013.01)i

According to International Patent Classification (IPC) or to both national classification and IPC

### B. FIELDS SEARCHED

Minimum documentation searched (classification system followed by classification symbols)
Int.Cl. B62K5/10, B60G17/015, B60G21/05, B62J99/00, B62K5/027

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2018-34531 A (EQUOS RESEARCH CO., LTD.) 08 March 2018, paragraphs [0015]-[0039], [0052]-[0127], fig. 1-17 & US 2018/0281886 A1, paragraphs [0039]-[0063], [0076]-[0152], fig. 1-17 & EP 3505434 A1 & CN 108025785 A | 1, 4, 10<br>2-3, 5-9, 11 |
| Y<br>A | JP 2011-230651 A (EQUOS RESEARCH CO., LTD.) 17 November 2011, paragraph [0031], fig. 1 (Family: none) | 1, 4, 10<br>2-3, 5-9, 11 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 October 2019 (09.10.2019) | 21 October 2019 (21.10.2019) |

| Name and mailing address of the ISA/ <br> Japan Patent Office <br> 3-4-3, Kasumigaseki, Chiyoda-ku, <br> Tokyo 100-8915, Japan | Authorized officer |
| --- | --- |
| | Telephone No. |

Form PCT/ISA/210 (second sheet) (January 2015)

## INTERNATIONAL SEARCH REPORT

International application No.

PCT/JP2019/029256

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2016-165986 A (EQUOS RESEARCH CO., LTD.) 15 September 2016, paragraph [0060], fig. 1-11 & US 2017/0291637 A1, paragraph [0078], fig. 1-11 & EP 3266690 A1 & CN 107074318 A | 1, 4, 10<br>2-3, 5-9, 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013023166 A